# EUROPÄISCHE PATENTSCHRIFT

(11) **EP 0 850 270 B1**
(45) Veröffentlichungstag und Bekanntmachung des Hinweises auf die Patenterteilung: **08.12.1999**
(21) Anmeldenummer: 96932516.6
(22) Anmeldetag: 12.09.1996
(51) Int. Cl.: C08L 3/02, C08J 7/04, B65D 65/46

(54) **VERFAHREN ZUR HERSTELLUNG VON FORMKÖRPERN MIT BARRIERESCHICHT AUS BIOLOGISCH ABBAUBAREM MATERIAL UND FORMKÖRPER**
PROCESS FOR PRODUCING MOULDINGS WITH A BARRIER LAYER MADE OF BIODEGRADABLE MATERIAL, AND MOULDINGS PRODUCED ACCORDING TO THIS PROCESS
PROCEDE DE PRODUCTION DE PIECES MOULEES POURVUES D'UNE COUCHE BARRIERE ET CONSTITUEES D'UN MATERIAU DEGRADABLE, ET PIECES MOULEES OBTENUES SELON CE PROCEDE

(30) Priorität: 12.09.1995 WO PCT/EP95/03592
(43) Veröffentlichungstag der Anmeldung: 01.07.1998
(73) Patentinhaber: FVP Formverpackung GmbH, 01445 Radebeul (DE)
(72) Erfinder: BAAR, Andreas, Gerhard, D-01445 Radebeul (DE); GEBEL, Wolfgang, D-01445 Radebeul (DE); IMHOF, Ute, D-01640 Coswig (DE); MIHALIK, Hannelore, D-01257 Dresden (DE)
(74) Vertreter: Rupp, Christian, Dipl.Phys.
(86) Internationale Anmeldenummer: EP9604016
(87) Internationale Veröffentlichungsnummer: WO9710293

(56) Entgegenhaltungen:
- EP-A- 0 474 095
- WO-A-94/13734
- WO-A-95/20628
- PATENT ABSTRACTS OF JAPAN vol. 18, no. 421 (C-1234) [6761] , 8.August 1994 & JP 06 125718 A (SADAMASA ANDO), 10.Mai 1994,

## Beschreibung

Die Erfindung betrifft ein Verfahren zur Herstellung von Formkörpern mit Barriereschicht, insbesondere Verpackungsformkörpern, aus biologisch abbaubarem Material sowie einen Formkörper nach diesem Verfahren. Insbesondere betrifft die Erfindung ein Verfahren zur Herstellung von Formkörpern zur Verwendung als recyclefähige, biologisch abbaubare Verpackungen, die biologisch abbaubares Fasermaterial enthalten und die z.B. zur Aufnahme von feuchten Nahrungsmitteln hinreichend beständig sind und den klimatischen Anforderungen der Einsatzgebiete entsprechen.

In Haushalt und Industrie fallen in großer Menge Altpapier sowie zellulosefaser- und stärkehaltige Produktionsrückstände in großer Menge an. Aus Gründen des Umweltschutzes und der Schonung natürlicher Ressourcen wird in steigendem Umfang auch recyceltes Altpapier als Ausgangsmaterial für die Papierherstellung wiederverwendet.

Andererseits besteht das dringende Bedürfnis, insbesondere im Verpackungsbereich, aber auch auf anderen Gebieten Formkörper zu verwenden, die die Abfallwirtschaft nur in geringem Maße beanspruchen, die zur Wiederverwertung aufschließbar (recyclebar) sind und z.B. im Rahmen der Kompostierung im wesentlichen rückstandsfrei biologisch abbaubar sind. Altpapier sowie zellulosefaser- und stärkehaltige Produktionsrückstände, wie z.B. Holzoder Papierschliff wie auch entfärbtes Altpapier (Deinking-Material) kommen daher auch als Grundstoffe für die Herstellung von Formkörpern als Verpackungsmittel in Betracht. Bei der Verpackung von Lebensmitteln werden aus recyceltem Altpapier hergestellt Produkte einer speziellen Oberflächenbehandlung unterworfen, um den hygienischen Anforderungen zu genügen. Bei ausschließlicher Verwendung von unverschutztem Altpapier aus der industriellen Verarbeitung kann eine solche Behandlung bei Einhaltung von gesetzlich festgelegten Produktions-Rahmenbedingungen entfallen.

So werden geformte Verpackungen nach dem Faserguß-Verfahren hergestellt, das auf den Grundlagen der konventionellen Papierherstellung basiert. Dabei werden Fasersuspensionen aus zerkleinertem Altpapier und Wasser bereitet und auf Formsiebe gegeben. Anschließend wird das Wasser entzogen und der Formling getrocknet, gegebenenfalls kann er auch einer verdichtenden Preßbehandlung unterzogen werden. Nachteilig ist hierbei, daß die Durchführung dieses Verfahrens, wie es beispielsweise aus der DE 40 35 887 bekannt ist, sehr aufwendig ist und durch den hohen Wasserbedarf die Umwelt belastet. Auch in der jüngsten Zeit hat es nicht an Versuchen gefehlt, geformte Verpackungen, die aus Kunststoff gefertigt werden und insbesondere für die Verpackung von Lebensmitteln geeignet sind, durch Produkte auf der Basis von Altpapier zu ersetzen.

So ist aus der DE-OS 39 23 497 die Herstellung einer mehrschichtigen Verpackungsschale für Lebensmittel bekannt, deren Trägerschicht überwiegend aus Recycling-Material auf der Basis von Altpapier besteht. Als Bindemittel ist hierbei ein Anteil an geschäumtem Kunststoff notwendig. Die Herstellung solcher Verpackungsschalen erfordert ein verhältnismäßig aufwendiges, mehrstufiges Verfahren, bei dem zerkleinertes Altpapiermaterial über einen Extruder zu einer bahnförmigen Trägerschicht geführt und anschließend im Verbund mit einer Deckschicht durch Tiefziehen bzw. Pressen zu Verpackungsschalen geformt wird. Während der Herstellung muß eine gesteuerte, dosierte Zugabe von Kunststoffgranulaten als Bindemittel in der Trägerschicht erfolgen. Aufgrund des Kunststoffeinsatzes besteht eine solche Verpackungsschale in nachteiliger Weise nicht aus vollständig verrottbarem, organischem Material. Überdies ist die Herstellung aufgrund der aufwendigen Verfahrensführung kostenintensiv.

Verpackungen auf Waffelteigbasis, sowohl als eßbare Verpackungen als auch, in Abhängigkeit von den verwendeten Zuschlagstoffen, als nicht-eßbare Verpackungen, sind ebenfalls bekannt (EP 513 106). Schwierigkeiten bestehen hierbei hinsichtlich der Langlebigkeit, Elastizität, Bruchfestigkeit und Haltbarkeit solcher Verpackungen.

Es ist schließlich auch bekannt, geformtes Verpackungsmaterial im wesentlichen auf Stärkebasis unter Verwendung von modifizierter Stärke unter Aufschmelzung der Stärke und anschließender Extrusion und Abkühlung herzustellen (EP 0 304 401 B1). Die Prokukteigenschaften des so gewonnenen Verpackungsmateriales sind allerdings für viele Zwecke aufgrund der doch verhältnismäßig niedrigen Bruchfestigkeit von Verpackungen auf Stärkebasis und deren hygroskopischen Eigenschaften nicht vollständig zufriedenstellend.

Biologisch abbaubare Verpackungen auf der Basis von Cellulose und Stärke und Wasser herzustellen und zwar nach einer Technologie, wie sie in der Waffelbacktechnik verwendet wird, ist aus der WO 95/20628 bekannt.

Bei der Verpackung von Lebensmitteln in biologisch abbaubaren Verpackungen spielt die Sperrwirkung solcher Verpackungsmittel gegenüber Wasser, Wasserdampf, Fetten, Sauerstoff oder sauren Lebensmitteln und Aromen eine bedeutende Rolle. Überwiegend weisen biologisch abbaubare Verpackungen nur eine ungenügende Widerstandsfähigkeit gegenüber diesen Medium auf, so daß sie auf vielen Gebieten Einweg-Verpackungen aus Kunststoffen oder Kunststoffverbunden nicht gleichwertig sind.

Zur Verpackung flüssiger Lebensmittel ist es daher bekannt, einen biologisch abbaubaren Verpackungswerkstoff zu schaffen, der eine sauerstoffsperrende Kernschicht aus Polyvinylalkohol aufweist, die beiderseits mit einem biologisch abbaubaren Kunststoff, z.B. Polyhydroxylbutyrat beschichtet ist, wobei diese biologisch abbaubaren Kunststoffschichten wiederum zum Schutz gegen Umgebungsbedingungen mit langzeit-wasserfesten Schichten, z.B. aus Cellulosederivat und/oder Papier beschichtet sind (EP 0 603 876 A1). Die Herstellung derartiger Verbundfolien ist verhältnismäßig aufwendig und führt nicht zu dreidimensionalen Formkörpern.

Biologisch abbaubare Verpackungsmaterialien mit einer wasserabstoßenden Imprägnierung zu versehen, ist aus der EP-A-0 474 095 bekannt. Aus der WO 95/13734 ist ein Verfahren zum wasserabweisenden bzw. wasserdichten Beschichten von Formkörpern auf Stärkebasis mit einem filmbildenden Stoff wie z.B. Celluloseacetat oder Celluloseacetatpropionat bekannt, bei dem mit dem hydrophoben, filmbildenden Stoff hydrophobe, verottbare Weichmacher verwendet werden.

Es hat sich allerdings gezeigt, daß für viele Anwendungen eine vollständig und für längere Zeiträume wasserfeste Barriereschicht nicht erforderlich sind, ggf. auch zu einer Behinderung der biologischen Abbaubarkeit führen kann. Weichmacher neigen überdies dazu, aus dem Polymehrverbund heraus in die mit ihnen in Kontakt stehenden Lebensmittel zu migrieren und die Kochwasserfestigkeit verringern.

Der Erfindung liegt daher die Aufgabe zugrunde, ein Verfahren zur Herstellung von Formkörpern mit Barriereschicht aus biologisch abbaubarem Material und einen solchen Formkörper anzugeben, das in kostengünstiger und einfacher Weise durchführbar ist und zu einem Formkörper, insbesondere für Verpackungszwecke, aus vollständig verrottbarem, biologisch abbaubarem Material führt, der sich durch eine hohe Oberflächengüte und geringe Porigkeit, hohe strukturelle Festigkeit und Elastizität sowie hinreichende Eigenschaften seiner Oberfläche auszeichnet, so daß er zur Aufnahme von wasser- und/oder fetthaltigen Lebensmitteln unterschiedlicher Temperatur geeignet ist.

Diese Aufgabe wird bei einem Verfahren der eingangs genannten Art erfindungsgemäß dadurch gelöst, daß als Fasermaterial eine Mischung aus lang- und kurzfasrigen Fasern oder Faserbündeln mit einer Faser- oder Faserbündellänge in einem Bereich von 0,5 mm bis 50 mm verwendet wird und der Formkörper unter Imprägnieren mit einer biologisch abbaubaren, hydrophoben Randschicht hergestellt wird, wobei die Randschicht aus einem weichmacherfreien Kunststoffmaterial, insbesondere Celluloseacetat und/oder Celluloseacetatpropionat besteht.

Die vorgenannte Aufgabe wird bei einem Verfahren der eingangs genannten Art erfindungsgemäß ferner dadurch gelöst, daß als Fasermaterial eine Mischung aus lang- und kurzfasrigen Fasern oder Faserbündeln mit einer Faser- oder Faserbündellänge in einem Bereich von 0,5 mm bis 50 mm verwendet wird und der Formkörper unter Ausbildung einer biologisch abbaubaren, flüssigkeitsdichten Randschicht durch eine Folienbeschichtung hergestellt wird, die durch ein Aufbringen einer Folie auf der Basis von Polyester, Polyesteramid oder Polymilchsäure auf den gebakkenen Formkörper ausgebildet wird.

Die Randschicht kann dabei vorzugsweise als eine im Anschluß an das Backen des Formkörpers aufgebrachte, biologische, abbaubare, hydrophobe Beschichtung ausgebildet werden, z.B. durch Gießen, Tauchen, Aufsprühen einer einen hydrophoben Stoff wie Celluloseacetat oder Celluloseacetatpropionat enthaltenden Lösung, wobei sich überraschenderweise gezeigt hat, daß auf den Einsatz von Weichmachern und ggf. auch auf Haftvermittler verzichtet werden kann, ohne daß die Anhaftung der Beschichtung beeinträchtigt ist. Vorzugsweise kann bei der Beschichtung der Formkörper bereits abgekühlt sein oder diese auch auf den noch vom vorangehenden Backvorgang heißen Formkörper erfolgen.

Die Imprägnierung, z.B. durch Aufsprühen, sichert gleichmäßige, dünne Schichten, ggf. kann eine Mehrfachbeschichtung erfolgen. Nach einem weiteren Aspekt der Erfindung werden zur Ausbildung der Randschicht Polyester-, Polyesteramid- oder Polymilchsäure-Folien verwendet, wobei diese Beschichtungen vorzugsweise ela-stisch sind und vorzugsweise ohne Haftvermittler durch Heißsiegeln unter Vakuum- oder Druckanwendung direkt auf den Formkörper aufgebracht werden (mit oder ohne Weichmacher).

Es war überraschend, daß eine Imprägnierung mit Celluloseacetat oder Celluloseacetatpropionat (oder einem Gemisch aus beiden und Lösungsmittel) auch ohne Weichmachereinsatz und, ggf. auch ohne Haftmittel auch bei hohem Fasergehalt im Formkörper eine gute Haftung auf dem Formkörper aufwies. Hierfür ist eine ausreichende Elastizität der Imprägnierung bzw. Beschichtung wesentlich. Formkörper aus Stärke und Cellulose enthalten ca. 10 % natürliche Feuchte, die sich mit der Umgebungsluftfeuchtigkeit ändert. Änderungen der Umgebungsluftfeuchte führen zu einem Ausdehnen oder Schrumpfen des Formkörpers. Um einen sicheren Zusammenhang von Randschicht und Formkörper zu gewährleisten, muß daher die Randschicht ausreichend elastisch sein und der Formänderung des Grundmateriales (Formkörper) folgen.

Weichmacherfreies, elastisches, biologisch abbaubares Kunststoffmaterial der vorgenannten Art eröffnet breite Anwendungsfälle, da Weichmacher stets aus dem Polymerverbund heraus in das in dem Formkörper aufgenommene Gut, insbesondere Lebensmittel, migrieren. Das Maß dieser Migration hängt von der Konzentration des Weichmachers in der Kontaktschicht (Randschicht), von der Löslichkeit des Weichmachers im Lebensmittel und der Einsatztemperatur der zugehörigen Verpackung ab.

Nach der vorliegenden Erfindung ist dieses Problem vollständig beseitigt, da weichmacherfreie, biologisch abbaubare Kunststoffmaterialien wie Celluloseacetat und Celluloseacetatpropionat als Imprägnierung verwendet werden.

Durch den Verzicht auf Weichmacher zur Herstellung der mit einer hydrophoben Randschicht versehenen Formverpackung erwies sich diese sowohl für kochendes Wasser als auch für heißes Fett ohne weiteres einsetzbar.

In Abhängigkeit von den Anforderungen an dem Einsatzwerk und die Hydrophobie wird die hydrophobe Randschicht durch Sprühen, Gießen oder Tauchen auch in Form von Folien mit einer Dicke zwischen 20 µm und 200 µm aufgebracht.

Das Folienmaterial, insbesondere Polyester-, Polyesteramidfolie oder, insbesondere elastische, Polymilchsäurefolie werden in Abhängigkeit vom Anwendungszweck und den Barriereanforderungen hinsichtlich Schmelzpunkt und Dicke der Folie ausgewählt. Wesentlich für eine beständige Anhaftung der Folie an dem Formkörper ist die Elastizität der Folie in kaltem Zustand. Die Anhaftung kann zwar durch Haftvermittler verbessert werden, es wird jedoch bevorzugt, ohne Einsatz einer speziellen Haftvermittlerschicht die Imprägnierung bzw. Beschichtung auf den Formkörper aufzutragen. Die Folienbeschichtung erfolgt mit weichmacherfreien oder auch mit biologisch abbaubaren Weichmachern enthaltenden Folien auf der Basis der vorgenannten Stoffe. Die Folien können ein- oder mehrlagig sein.

Nach einem bevorzugten Ausführungsbeispiel des erfindungsgemäßen Verfahrens wird die Folie an ihrer zur Haftverwindung mit dem Formkörper vorgesehenen Unterseite bis nahe ihres Schmelzpunktes erwärmt, während die Oberseite der Folie bei einer deutlich niedrigeren Temperatur verbleibt.

Die Folie kann gegebenenfalls durch einen Stempel vor Aufbringen auf den Formkörper vorgedehnt werden.

Ist das Vorerwärmen der Folie an ihrer Unterseite nicht möglich, kann alternativ auch der Formkörper vor einer Beschichtung mit der Folie auf eine Temperatur oberhalb der Schmelztemperatur der Folie vorgewärmt und anschließend die Folie durch Druck oder Vacuum aufgebracht werden.

Nach einer anderen bevorzugten Ausführungsform des erfindungsgemäßen Verfahrens wird zur Hydrophobierung der Backmasse dieser ein hydrophober Stoff oder ein Gemisch solcher Stoffe, wie z.B. Celluloseacetat, Celluloseacetatproprionat synthetisch oder biologisch hergestellte und biologisch abbaubare Polyester oder Polyesterderivate, insbesondere Polyateramid oder Polymilchsäure beigegebene, so daß der gebackene Formkörper am Ende des Backvorganges bereits selbst hydrophobe Eigenschaften und insbesondere eine entsprechende, das Eindringen von Flüssigkeit jedenfalls für einen hinreichenden Zeitraum verhindernde Randschicht aufweist.

Nach einem bevorzugten Verfahren kann für eine zumindest zeitweilige, gegen kalte oder heiße Flüssigkeiten sperrende Beschichtung des gebackenen Formkörpers dieser zunächst mit Dampf konditioniert werden, anschließend ein Haftvermittler aufgetragen und im Anschluß hieran die Beschichtung aufgebracht werden.

Hinsichtlich der Vorbereitung der Backmasse besteht der Formkörper im wesentlichen aus biologisch abbaubarem Fasermaterial, das mit Stärke zu einem Fasermaterial- Stärke-Verbund aufgrund der Verkleisterung der Stärke verfestigt ist.

In Abhängigkeit von den verwendeten Ausgangsmaterialien, d.h. dem faserhaltigen Rohmaterial bzw. der Art der biologisch abbaubaren Fasern, die auch unmittelbar verwendet werden können, und dem vorgesehenen Einsatzzweck sowie in Abhängigkeit von der Verpackungsgestalt (Formtiefe während des Backprozesses) ergibt sich ein variables Feld von Prozeßparametern sowohl hinsichtlich der Mischungsverhältnisse der Einsatzstoffe Wasser, biologisch abbaubares Fasermaterial und Stärke, sowie der verwendeten Zerkleinerungs-Egalisierung und Backtechnologie.

Nach einer bevorzugten Ausführungsform des erfindungsgemäßen Verfahrens kann dieses mit einem verhältnismäßig hohen Anteil an Fasermaterial, d.h. an Altpapier und zellulosefaser- und stärkehaltigen Produktionsrückständen, bzw. anderen biologisch abbauren Fasermaterialquellen, wie z.B. Rübenschnitzel, verwendet werden, wobei dennoch hervorragende Produkteigenschaften der auf dieser Weise hergestellten Formkörper als Verpackungsmaterialien erreicht werden. Die Formkörper bzw. das so hergestellte Verpackungsmaterial sind rasch biologisch abbaubar und können ohne großen Aufwand recycelt werden. Die Verwendung von Altpapier und zellulosefaser- und stärkehaltigen Produktionsrückständen, wie z.B. Holz- und Papierschliff, Rübenschnitzeln oder dergl. führt auch schon bei verhältnismäßig geringem Stärkeanteil unter Endverarbeitung der egalisierten, viskosen Masse in einer abschließenden Back-Verfahrensstufe, die Elemente der Waffelbacktechnologie nutzt, zu einem überraschend hochwertigen, und durch die Ausbildung eines Fasermaterial-Stärke-Verbundes auch äußerst haltbaren, dabei elastischen Formkörper, insbesondere für Verpackungszwecke, bei zugleich kostengünstiger und umweltschonender Herstellung.

Andererseits kann das erfindunsgemäße Verfahren auch die deutlich verringerten Fasermaterialanteile, vorzugsweise bis zu einem Verhältnis Fasermaterial zu Stärken von 1:4 und einem Fasermaterialanteil von 10 Gew% bis 30 Gew% der viskosen Masse sowie mit einem Anteil von 20 Gew% bis 50% von modifizierter oder vorverkleisterter Stärke oder Stärkeanteil in der viskosen Masse (Anteil modifizierter oder vorverkleisterter Stärke in der viskosen Masse 1 Gew% bis 13 Gew.-%) durchgeführt werden, wobei äußerst formbeständige Formkörper erhalten werden und der Faseranteil hierbei insbesondere als Rohfasermaterial eingesetzt wird.

Bevorzugte Ausgestaltungen des erfindungsgemäßen Verfahrens sowie von Kompositionen des Formkörpers sind in den Unteransprüchen dargestellt.

Hinsichtlich des Formkörpers wird die vorgenannte Aufgabe bei einem Formkörper der eingangs genannten Art erfindungsgemäß dadurch gelöst, daß der Formkörper ein Gemisch aus lang- und kurzfasrigen Fasern oder Faserbündeln mit einer Faser- oder Faserbündellänge von 0,5 mm bis 50 mm sowie zumindest einseitig eine biologisch abbaubare, hydrophobe Randschicht aufweist, die weichmacherfrei auf der Basis von Celluloseacetat oder Celluloseacetatpropionat gebildet ist oder die eine Folienbschichtung auf der Basis von Polyester, Polyesteramid oder Polymilchsäure aufweist. Diese Folienbeschichtung kann mit oder ohne Verwendung von Weichmacher vorliegen.

Als Lösungsmittel für die Imprägnierung wird Ethanol, Aceton oder Ethylenacetat verwendet werden.

Der Formkörper weist vorzugsweise eine poröse Innenstruktur auf, die durch eine periphere Hautschicht größerer Dichte abgeschlossen ist, wobei die Hautschicht, vorzugsweise ohne Zwischenlage einer Haftvermittlerschicht, die flüssigkeitsdichte Beschichtung trägt.

Bevorzugte Ausgestaltungen des erfindugsgemäßen Formkörpers sind in den übrigen Unteransprüchen dargelegt.

Die Erfindung wird nachstehend anhand von Ausführungsbeispielen und zugehörigen Zeichnungen näher erläutert. In diesen zeigen:
- Fig. 1: ein Ablaufdiagramm des Verfahrens zur Formkörperherstellung auf der Grundlage des Einsatzes von Altpapier als faserhaltigem Rohmaterial,
- Fig. 2: ein Ablaufdiagramm eines weiteren Ausführungsbeispieles zur Formkörperherstellung auf der Grundlage der Verwendung von bereits vorzerkleinertem, entfärbtem Altpapiermaterial (Deinking-Material),
- Fig. 3: ein Ablaufdiagramm für ein weiteres Ausführungsbeispiel eines Verfahrens zur Formkörperherstellung auf der Basis der Verwendung von Produktionsabfällen als faserhaltigem Rohmaterial, wie Papierschliff, Rübenschnitzel, Holzschliff etc.,
- Fig. 4a und 4b: Tabellen für verschiedene Probenmuster mit unterschiedlichem Einsatz nativer Stärke und konstantem Wasseranteil, bezogen jeweils auf die Trockenmasse des Fasermateriales,
- Fig. 5a und 5b: Tabellen für verschiedene Probenmuster mit unterschiedlichem Einsatz nativer Stärke sowie vorverkleisterter Stärke bei konstantem Wasseranteil, bezogen jeweils auf die Trockenmasse des Fasermateriales,
- Fig. 6: eine Tabelle und eine entsprechende grafische Darstellung der Klassierungen der Länge des verwendeten Fasermateriales,
- Fig. 7: ein Druck-Zeit-Diagramm für einen Backvorgang zur Herstellung eines Formkörpers nach einem der vorgenannten Verfahren,
- Fig. 8: eine Tabelle zur Produktbewertung von Formkörpern in Abhängigkeit von der Formtiefe der verwendeten Backform und in Abhängigkeit von klassiertem Fasermaterial,
- Fig. 9: eine Tabelle zur Produktbewertung von Formkörpern in Abhängigkeit von der Formtiefe der verwendeten Backform und in Abhängigkeit von Fasermaterialgemischen mit unterschiedlicher Länge der Fasern bzw. Faserbündel,
- Fig. 10: eine Rezepturtabelle für die Herstellung von Formkörpern auf der Basis von Altpapier als faserhaltigem Material,
- Fig.11: eine Rezepturtabelle für die Darstellung von Formkörpern, insbesondere für Verwendung von Rohfasermaterial,
- Fig.12: eine vergrößerte Querschnittsdarstellung eines Wandabschnittes eines Formkörpers,
- Fig.13: Ausführungsbeispiele für eine hydrophobe Imprägnierung (Sprühbeschichtung) von Trays und Töpfen mit Rezeptur gemäß Y14 (siehe Fig. 4b,5b,11) mit Celuloseacetat,
- Fig.14: Ausführungsbeispiele für eine Beschichtung von Trays und Töpfen eines Formkörpers gem. Rezeptur Y14 (s.Fig.4b,5b,11) mit Celluloseacetatpropionat,
- Fig.15: Ausführungsbeispiele für eine Folienbeschichtung von Trays und Töpfen mit Folien auf Basis von Polyester, Polyesteramid und Polymilchsäure,
- Fig.16: eine Tabelle zur Produktbewertung von Formkörpern, beschichtet mit Celluloseacetat oder Celluloseacetatpropionat mit und ohne Weichmacher,
- Fig.17 bis 20: verschiedene Ausführungsformen von Formkörpern, die nach Ausführungsbeispielen des erfindungsgemäßen Verfahrens hergestellt wurden.

Im Rahmen der vorliegenden Anmeldung wird der Begriff Fasermaterial oder Faserstruktur sowohl für die Aufschließung bis auf Einzelfasern als auch für das Aufschließen bis auf lediglich verhältnismäßig große Faserbündel des faserhaltigen Rohmateriales verwendet.

Im Rahmen der vorliegenden Anmeldung umfaßt der Begriff "hydrophobe Imprägnierung bzw. flüssigkeitsdichte Beschichtung" das Aufbringen der Barriereschicht, deren Wirkung in Abhängigkeit vom Material und Schichtdicke auch nur für einen bestimmten, gegebenenfalls verhältnismäßig kurzen Zeitraum gegeben sein kann. So kann auf diese Weise eine Flüssigkeitsresistenzeigenschaft des Formkörpers bezeichnet werden, die dieser bei Raumtemperatur (25-40°C) und einer relativen Feuchtigkeit der Umgebung von 0-90% für mehrere Tage aufweist (Anwendungsklasse A1). Des weiteren wird hierunter im Ergebnis auch eine Kaltwasserfestigkeit für 24 Stunden bezeichnet, wobei das Packgut Raumtemperatur (25-40°C) oder weniger als Raumtemperatur aufweist (Anwendungsklasse A2). Schließlich bezeichnet die Ausbildung einer biologisch abbaubaren, hydrophoben Randschicht (vorzugsweise Beschichtung) auch eine Kochwasserfestigkeit von mindestens von 30 Minuten vorzugsweise 1 Stunde, wobei das Packgut eine Temperatur von 95°C aufweisen kann (Anwendungsklasse A3). Hierbei soll der Formkörper seine Formstabilität nicht verlieren und eine spürbare Penetration von Flüssigkeit in die Formkörperstruktur vermieden sein.

Der Begriff "hydrophobe Imprägnierung" umfaßt im Rahmen dieser Anmeldung den gesamten Bereich der Hydrophobie von gewissen wasser- oder fettabweisenden Eigenschaften (keine geschlossene Randschicht, sondern porig durchbrochene Beschichtungsinseln oder Droplets) bis zur tatsächlichen Wasserfestigkeit im Sinne einer Sperrschicht, wobei letztere teilweise auch erst bei mehrschichtiger Imprägnierung erreicht werden kann.

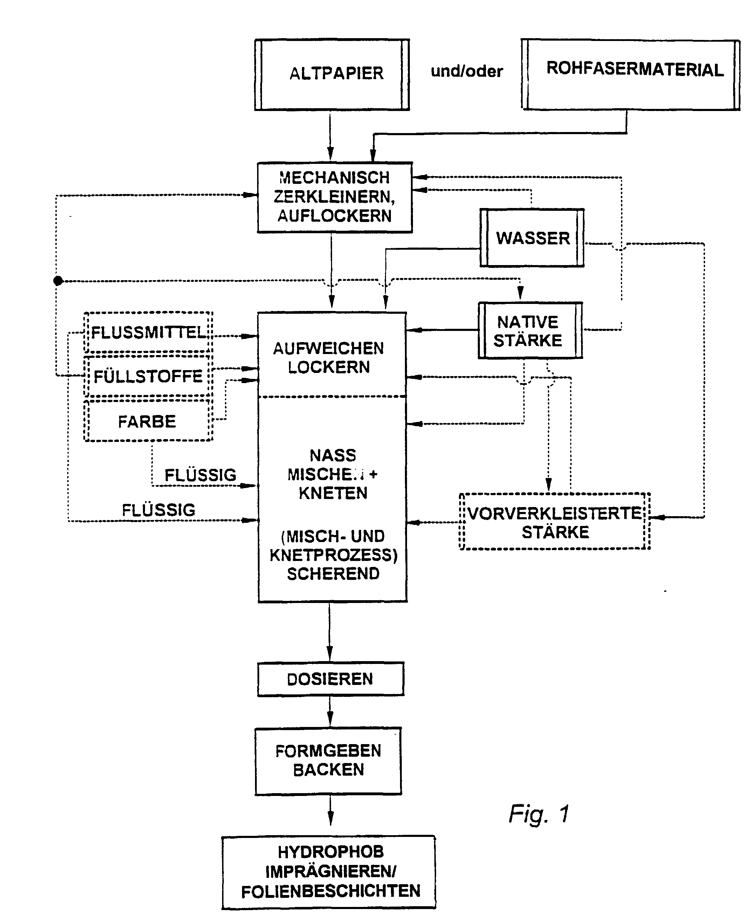

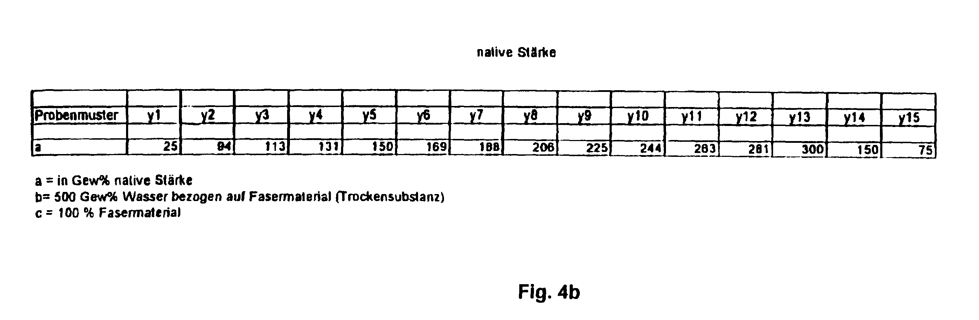

Fig.1 verdeutlicht ein erstes Ausführungsbeispiel des Verfahrens zur Herstellung von Verpackungsformkörpern auf der Basis von Altpapier. Im Rahmen dieses Verfahrens kann jedoch auch Rohmaterial (Rohfasermaterial), insbesondere dann verwendet werden, wenn mit einem weiter abgesenkten Faseranteil in der Masse und erhöhten Stärkeanteil gearbeitet wird (vgl. Ausführungsbeispiel mit Fig.4b,5b,11).

Dabei sind in Fig. 1 gegebenenfalls zusätzlich vorgesehene Einsatzmaterialien (z.B. vorverkleisterte Stärke, Füllstoffe, Flußmittel, Farbe) oder die Zugabe der Einsatzmaterialien in alternativen Prozeßstufen oder kombinatorisch zu den in Vollinien dargestellten Verwendungsmöglichkeiten durch unterbrochene Linien dargestellt.

In einem ersten Verfahrensschritt wird das Altpapier in trockenem Zustand zerkleinert, wobei diese Zerkleinerung vorzugsweise schonend und nicht-schneidend, sondern z.B. durch Shredder, Häcksler oder Schlagmühlen, wie Stift- oder Hammermühlen erfolgen soll, so daß im wesentlichen die Papierfasern nicht angeschnitten werden, da dies zu einer wesentlich erhöhten Wasseraufnahme im anschließenden Prozeß durch die dann erhöhte Saugfähigkeit der Zellulosefasern des Altpapiers führt. Der Zerkleinerungsvorgang soll zerreißend zu Altpapierschnitzeln in einer Größenordnung von bis zu ca. 10 mm, vorzugsweise bis zu ca. 5 mm, führen. Für dickwandige und/oder großflächige Formkörper können zur Verbesserung der Eigenstabilität Fasern oder bevorzugt gelockerte Faserbündel bis zu 50 mm Faser- bzw. Faserbündellänge verwendet werden. Auch für diesen Anwendungsfall wird bevorzugt ein Gemisch aus längeren Fasern oder Faserbündeln im Bereich von ca. 10 mm bis 50 mm mit kurzen Fasern oder Faserbündeln im Bereich von 0,5 mm bis 20 mm verwendet.

Bei Verwendung längerer Faserbündel sinkt der vorbereitende Zerkleinerungsaufwand entsprechend.

Wie auch bei den übrigen erläuterten Ausführungsbespielen, führt die bevorzugte Auflockerung der Faserbündel zu einer innigeren Verbindung mit der verkleisternden Stärke, die in die Faserbündel-Hohlräume eindringen kann, so daß die Ausbildung eines Faser/Faserbündel-Gerüstes (untereinander "vernetzte" Fasern/Faserbündel) durchdringen und überlagert von einer Stärke-matrix gefördert und ermöglicht wird, die zu einer hervorragenden inneren Bindung unter den Gegebenheiten eines Wasserdampf unter Druck freisetzenden Backprozesses führt.

Der Zerkleinerungsprozeß wird vorzugsweise so geführt, daß es zu einer Auflockerung der von dem Zerkleinerungsprozeß betroffenen Faserbündel der Altpapierschnitzel kommt.

Das auf diese Weise schonend zerkleinerte, im wesentlichen zerrissene Altpapier wird zum Aufschließen seiner Faserstruktur sodann unter Wasserzugabe und unter Aufweichen und weiterer Lockerung in einem Misch- und Knetprozeß zerfasert und zu einer viskosen Masse egalisiert.

Der Misch- und Knetprozeß, für den vorzugsweise diskontinuierliche oder kontinuierliche Kneter bzw. Mischer und Kneter verwendet werden, erfolgt in Anwesenheit von Wasser.

Da es vorteilhaft ist, in Abhängigkeit von den übrigen Bestandteilen der viskosen Masse und insbesondere in Abhängigkeit vom Stärkeanteil (zu dessen hinreichender Verkleisterung das freie Wasser im wesentlichen benötigt wird) den Wasseranteil möglichst gering zu halten, um den anschließenden Formgebungsvorgang (Backen) effizient durchführen zu können, hat sich gezeigt, daß für viele, bevorzugte Anwendungen (hochfeste Formkörper, dichtes Gefüge) ein Wasseranteil von 2 : 1 bis 3 : 1, bevorzugt von 2,5 : 1, bezogen auf die Trockenmasse des Altpapieres, vorteilhaft ist. Zugleich wird in die Masse native Stärke, z.B. nativer Getreide-, Kartoffel-, Mais- oder Reis- stärke gegeben. Der Misch- und Knetprozeß zur Egalisierung dieser viskosen Masse wird ebenfalls zur Faserschonung und damit zur Verminderung der Wasseraufnahme durch die Zellulosefasern praktisch vollständig unter Scherung, d.h. unter Verwendung der Scherkräfte zwischen den Masseteilchen bzw. zwischen den Masseteilchen und einem Knet- oder Mischorgan und damit durch innere Reibung bewirkt, so daß eine schonende Aufschließung der Altpapierschnitzel auf ihre Faserstruktur erfolgt.

Der Begriff "Faserstruktur" umfaßt im Rahmen dieser Anmeldung sowohl die Aufschließung bis auf Einzelfasern als auch das Aufschließen bis auf lediglich verhältnismäßig große, vorzugsweise aufgelockerte Faserbündel des Ausgangsmateriales.

Es wird in vielen Fällen bevorzugt, das Aufschließen lediglich bis auf die Faserbündel vorzunehmen, da es in Verbindung mit der Verkleisterung der Stärke hierdurch zu einer fester vernetzten Struktur und der Ausbildung eines Faserbündel-Stärke-Verbundes kommt.

Das Verhältnis von Stärke zu Fasermaterial kann in der viskosen Masse in weitem Rahmen variieren und insbesondere vom Anwendungsgebiet und den Qualitätsanforderungen an den fertigen Formkörper abhängen.

Für besonders glatte Oberflächen bei hoher Elastizität und, bedingt durch den Einsatz gelockerter Faserbündel, die in erhöhtem Maße zur strukturellen Festigkeit beitragen, kann der Stärkeanteil auch wesentlich über 50% (bezogen auf das Trockengewicht des Altpapieres) liegen, z.B. bei einem Verhältnis Fasermaterial zu Stärke von 1:4.

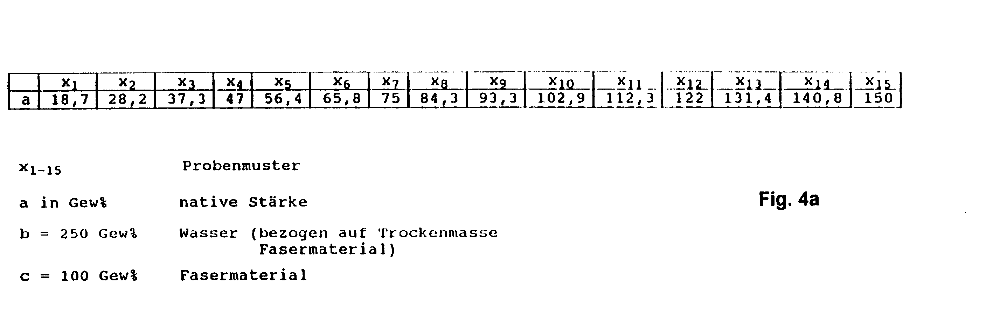

Die Stärke wird vorzugsweise als native Stärke zugemischt. Mischungsverhältnisse zwischen nativer Stärke und Fasermaterial (Altpapier), bezogen auf die Trockenmasse des Altpapieres und unter Einhaltung eines 2,5-fachen Wasserüberschusses, bezogen auf diese Trockenmasse des Altpapieres, sind in Fig. 4 dargestellt.

Innerhalb des in Fig. 1 als zweiten Verfahrensschritt (Knetund Mischprozeß) zur Aufschließung der Altpapierschnitzel auf ihre Faserstruktur (bevorzugt Faserbündel) kann dieser Verfahrensschritt in eine Vorbehandlung der Altpapierschnitzel zur Aufweichung derselben unter Wasserzugabe und weiterer Auflockerung unterteilt werden, wobei auch in diesem Verfahrensstadium Flußmittel, insbesondere Zusätze mit alkalischer Wirkung, zur Verbesserung der Fließeigenschaften der viskosen Masse bei einem anschließenden Backprozeß sowie Füllstoffe oder Farbstoffe wahlweise beigegeben werden können.

Es ist darüber hinaus auch möglich, Füllstoffe mit der nativen Stärke oder Teilen derselben vorzumischen und teilweise bereits während des vorgeschalteten Verfahrensschrittes der Trockenzerkleinerung beizugeben oder auch insgesamt der Mischung während der unter Anwesenheit von Wasser erfolgenden Ausbildung der viskosen Masse unter Durchführung des Misch- und Knetprozesses zum Zerlegen des Altpapieres in seine Faserstruktur beizugeben.

Wie nachstehend noch genauer erläutert wird, ist es in einer besonders vorteilhaften Verfahrensführung auch möglich, zusätzlich zu der nativen Stärke modifizierte oder vorverkleisterte Stärke zu verwenden, um einerseits während eines anschließenden Backprozesses noch eine durch den Vorverkleisterungszustand definierte Wassermenge bereitzustellen bzw. auch bei sehr kurzen Verweilzeiten der Masse im anschließenden Backprozeß eine Verkleisterung der Stärke zur Bildung eines stabilen Faser-Stärke-Verbundes zu erreichen. Bei Zugabe in Fig. 1 fakultativ zusätzlich eingesetzten vorverkleisterten Stärkeanteiles kann die freie Wasserzugabe eingeschränkt werden.

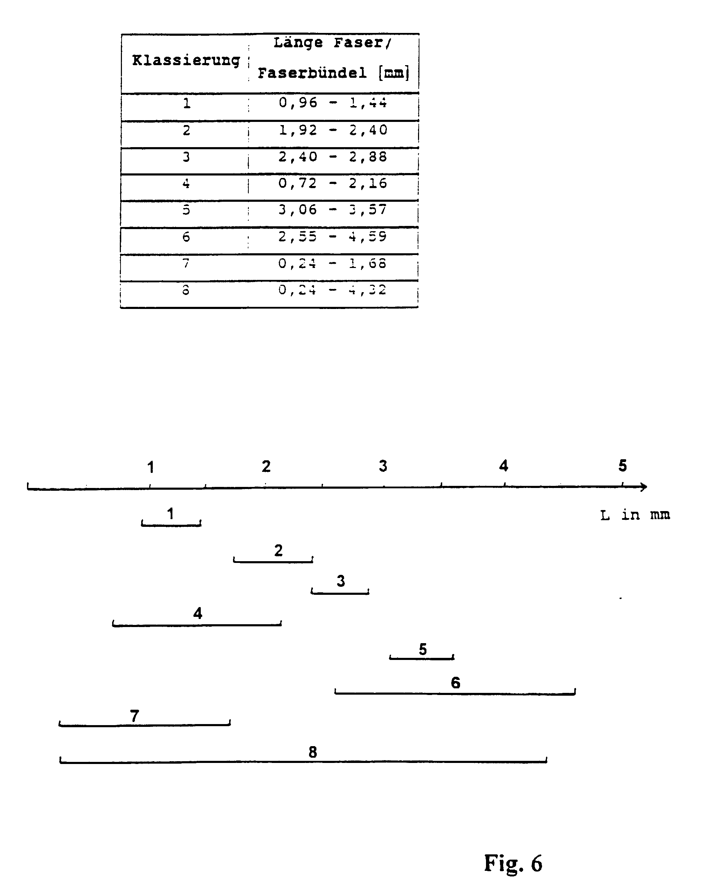

Besonders gute Ergebnisse hinsichtlich Oberflächenqualität, Elastizität, Gefügeaufbau, Struktur und Festigkeit wurden bei den hergestellten Formkörpern dann erreicht, wenn neben einer Mischung aus nativer und vorverkleisterter Stärke zugleich eine Mischung aus Fasermaterial unterschiedlicher Faserlänge, insbesondere unter Verwendung von Faserbündeln unterschiedlicher Länge oder von Faserbündeln in Verbindung mit Einzelfasern (bei Verwendung von faserhaltigem Rohmaterial wie z.B. Altpapier unterschiedlichen Zerkleinerungsgrades) verwendet wurden. Nähere Einzelheiten hierzu werden nachstehend noch mit Bezug auf andere Ausführungsbeispiele erläutert (s. Fig. 6).

Als Füllstoffe kommen insbesondere Kreide, Kaolin, Talkum, Gips, Tonerde, Titandioxid oder Aluminiumoxid in Betracht. Als Flufmittel werden alkalische Zusätze wie Magnesiumcarbonat, Magnesiumhydroxidcarbonat, Natronlauge oder Ammoniumhydroxid verwendet. Das Wasser, vorzugsweise in einem Anteil des 2,5-fachen der Trockenmasse des Altpapiermateriales, wird in einer Menge zugeführt, die zum einen für das Erzielen einer viskosen, fließend-breiigen bis hochviskosen, plastischen Konsistenz der Masse notwendig ist und zum anderen zur Verkleisterung der Stärke in einem anschließenden Backprozeß benötigt wird.

Es kann jedoch auch mit einem höheren Wasserüberschuß gearbeitet werden, insbesondere dann, wenn zusätzlich zur nativen Stärke keine vorverkleisterte Stärke eingesetzt wird. Beim Durchmischen und Kneten der viskosen Masse wird einerseits das Altpapier auf seine Faserstruktur, hier vorzugsweise auf verhältnismäßig große Faserbündel, zerlegt und werden andererseits diese Faserbündel (oder auch Einzelfasern) innig und egalisierend mit der Stärke vermischt und eine innige Verbindung zwischen der aufgeweichten Papierfaserstruktur und der Stärke herbeigeführt.

Anschließend wird nach Egalisierung der viskosen Masse diese bezüglich der nachfolgenden Einführung in zumindest eine Backform dosiert und in die Backform eingegeben. Die Backform wird dabei durch zumindest zwei Backplatten, d.h. eine obere und eine untere Backplatte (aufgenommen in einer Backzange) gebildet, wobei die Innenoberflächen der Backplatten in einem geschlossenen, verriegelten Zustand der Backform unter Bildung eines Formhohlraumes beabstandet gehalten werden und der Formhohlraum durch die viskose Masse ausgefüllt wird. Selbstverständlich können zur gleichzeitigen Herstellung einer Mehrzahl von Formkörpern auch eine Mehrzahl von Backzangen verwendet werden.

In Fig. 4a ist für 15 Probenmuster die Einsatzmenge von nativer Stärke bei konstant gehaltener Wassermenge (das 2,5-fache), bezogen jeweils auf die Trockenmasse des Altpapier-Fasermateriales (Faserbündel) dargestellt.

In Fig.4b ist für 15 andere Probenmuster Y1-Y15 die Einsatzmenge von nativer Stärke bei konstant gehaltener Wassermenge (das Fünffache), bezogen jeweils auf die Trockenmasse des Fasermaterials (Faserbündel) dargestellt, wobei hier als Fasermaterial auch insbesondere Rohfasermaterial eingesetzt werden kann.

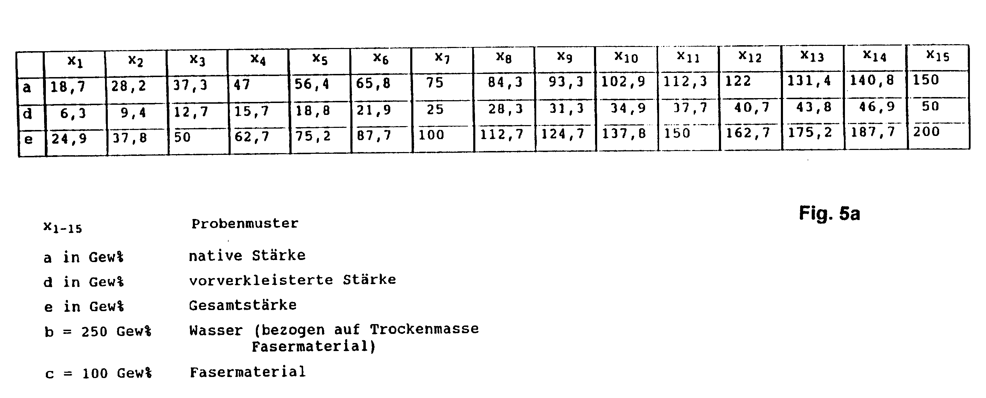

Hinsichtlich der bevorzugten Verwendung einer Mischung aus nativer und vorverkleisterter Stärke gibt die Tabelle gemäß Fig. 5a bevorzugte Verhältnisse des Einsatzes von nativer und vorverkleisterter Stärke wieder. Als vorteilhaft hat sich herausgestellt, wenn das Verhältnis zwischen nativer und vorverkleisterter Stärke ca. 3 : 1 beträgt.

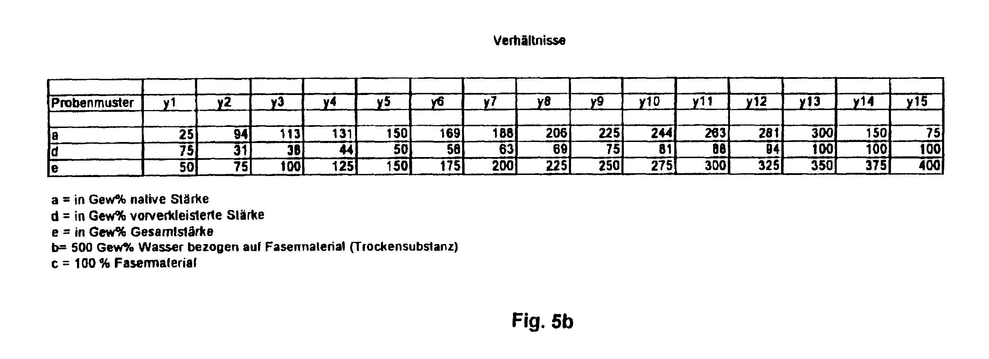

In weiteren Probenmuster-Ausführungsbeispielen gibt Fig.5b bevorzugte Verähltnisse des Einsatzes von nativer und vorverkleisterter Stärke wieder. Bei einem Gesamt-Mischungsverhältnis von Stärke zu Fasermaterial von 1 : 2 bis 4 : 1 kann das Verhältnis zwischen nativer und vorverkleisterter Stärke hier zwischen 1 : 3 bis ca. 3 : 1 variieren.

In Verbindung mit einer Erhöhung des tärkeanteils bei verringertem Fasermaterialanteil in der Masse (Fasermaterialanteil vorzugsweise 10 Gew% bis 30 Gew%), z.B. einem Verhältnis von Fasermaterial an Gesamtstärke in der viskosen Masse (in Gewichtsanteilen) von 1:4 kann auch das Einsatzverhältnis von modifizierter oder vorverkleisterter Stärke zu Gesamtstärke auf einen Bereich von 1:5 bis 1:2 verbreitert werden. Der Anteil modifizierter oder vorverkleisterter Stärke in der viskosen Masse kann auf bis ca. 13 Gew% erhöht werden.

Überdies wurden vorteilhafte Eigenschaften bei den erfindungsgemäß hergestellten Formkörpern dann beobachtet, wenn der Anteil von Stärke zu Wasser in der viskosen Masse ca. 1 : 10 bis 1 : 1, vorzugsweise 1 : 3 bis 1 : 2, betrug.

Der Backprozeß, der in seiner Technologie auf Grundelemente der Waffelbacktechnologie zurückgreift, beginnt mit dem Schließen und Verriegeln der Backform unter Belassung des massegefüllten Formhohlraumes zwischen oberer Backplatte und unterer Backplatte. Dieser Abstand, der durch Verriegelung der oberen und unteren Backplatte während des Backvorganges konstant gehalten wird, bestimmt die Wandstärke des fertigen Formkörpers.

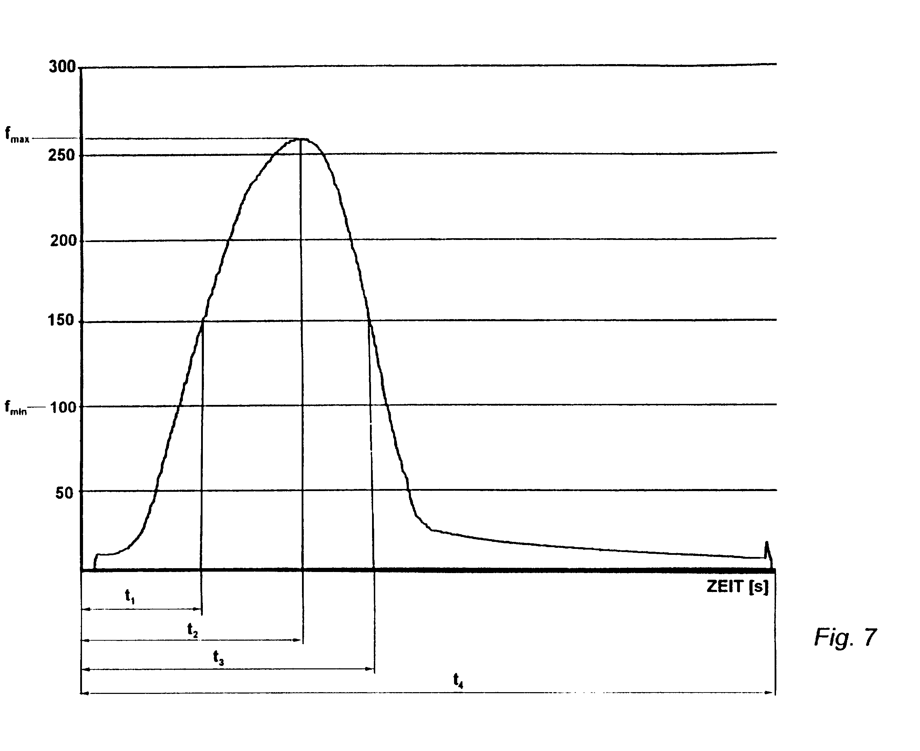

Der Backprozeß, dessen zeitlicher Ablauf in einem Druck-Zeit-Diagramm nach Fig. 7 dargestellt ist, erfolgt bei einer Temperatur zwischen 105°C und 300°C, wobei vielfach mit einer Backtemperatur von ca. 180°C besonders günstige Ergebnisse hinsichtlich des Ausbackens des Formkörpers und der Formkörpergeometrie erreicht wurden. Die Backdauer ist abhängig von verschiedenen Parametern, insbesondere von der Viskosität der Masse (Wassergehalt), dem Stärkeanteil (die Zeitdauer muß die vollständige und durchgehende Verkleisterung der nativen Stärke, auch im Zusammenwirken mit der gegebenenfalls eingesetzten modifizierten oder vorverkleisterten Stärke ermöglichen), der Geometrie des Formkörpers und den konkreten Massebestandteilen. Im allgemeinen kann zwischen einer Backdauer von 0,5 bis 15 Minuten variiert werden, wobei kürzere Zykluszeiten im Bereich von 1 bis 3 Minuten im allgemeinen ausreichend sind und zu maßhaltigen Formkörpern mit hoher, glatter Oberflächenqualität, großer Elastizität und struktureller Festigkeit aufgrund des sich ausbildenden Faser- bzw. Faserbündel-Stärke-Verbundes, einer faserverstärkten Stärkematrix, führen.

In anderen Fällen, insbesondere bei höherem Wasseranteil, hat auch eine Backdauer zwischen 3 und 13 Minuten zu guten Ergebnissen geführt, wobei zur Erhöhung der Effizienz der Verfahrensführung eine möglichst kurze Backdauer vorteilhaft ist, ohne daß die gleichmäßige innere Gefügeausbildung der Faserbündel-Stärke-Matrix beeinträchtigt wird.

In Fig. 7 ist die Formschließkraft der Backform über der Zeit aufgetragen, wobei der Druckanstieg während des dargestellten Backvorganges auf die Druckerhöhung infolge des Ausdampfens und des Verdampfungsprozesses des Wassers in der Masse zu beobachten ist. Für die vollständige Formkörperausbildung ist wesentlich, daß eine minimale, am Schließbolzen der Backform erfaßte, den Innendruck der Form aus der Wasserverdampfung repräsentierende Kraft von ca. 150 kp überschritten und andererseits der maximale Innendruck, der durch die maximal am Schließbolzen auftretende Kraft, hier von ca. 256 kp repräsentiert wird, nicht wesentlich überschritten wird oder übermäßig ansteigt.

In Fig. 7 bezeichnet t₁ die Zeit vom Verschließen der Backform bis zum Erreichen der einem minimalen Verdampfungsdruck in der Backform repräsentierenden Wert der Formschließkraft fₘᵢₙ, t₂ die Zeit vom Verschließen der Backform bis zum Erreichen eines einen maximalen Verdampfungsdruck innerhalb der Backform repräsentierenden Wert der Formschließkraft fₘₐₓ, t₃ die Zeit vom Verschließen der Backform bis zur Beendigung der Wasserdampfabgabe, t₄ die Ausbackzeit bzw. Trocknung des gebackenen Formkörpers und t₅ die gesamte Backdauer vom Schließen der Backform bis zum Öffnen der Backform repräsentieren. Im vorliegenden Fall wurde mit einer Schließkraftdifferenz fₘₐₓ-fₘᵢₙ von ca. 100 kp eine gute Qualität und Ausformbarkeit des Formkörpers erreicht, wobei t₅ die bevorzugte Backdauer im Bereich von 1 bis 3 Minuten repräsentiert.

Die Differenz t₃-t₁ betrifft somit den Backvorgang und die Formgebung unter Dampfabgabe.

Bei dem Backvorgang verkleistert die native Stärke (gegebenenfalls auch unter Wasseraufnahme von einem vorverkleisterten Stärkeanteil) und erstarrt. In die gelockerten Faserbündelstrukturen des Altpapieres wird die Stärke eingelagert und erzeugt eine stabile Bindung der gelockerten Faserstruktur mit der sich durch Verkleisterung ausbildenden Stärke-Matrix.

Wird lediglich native Stärke verwendet, genügen derartige Formkörper bereits einer Vielzahl von Anwendungsfällen hinsichtlich Elastizität und Oberflächengüte. Während ein hoher Stärkeanteil zu einer besseren Oberfläche bei allerdings verringerter Elastizität führt, kann die Elastizität des Formkörpers durch eine Verringerung des Stärkeanteiles üblicherweise nur zu Lasten einer glatten Oberfläche verringert werden. Durch das erfindungsgemäße Verfahren ist es jedoch möglich, eine wesentliche Verbe-serung der Elastizität bei gleichzeitiger Gewährleistung einer hohen Oberflächengüte dadurch zu erreichen, daß neben nativer Stärke modifizierte oder vorverkleisterte Stärke verwendet wird. Die besondere Wirksamkeit der Verwendung einer Mischung aus vorverkleisterter und nativer Stärke wird darauf zurückgeführt, daß, bedingt durch die hohe Saugfähigkeit des Altpapieres, im Backprozeß für die Verkleisterung der nativen Stärke nicht genügend freies Wasser bzw. Backdauer zur Verfügung steht. Die eingebrachte, native Stärke verkleistert daher bei herkömmlichen Produkten vielfach nicht vollständig und bewirkt eine breite Streuung hinsichtlich der Elastizität der so erhaltenen Formkörper.

Erfindungsgemäß können in ihren Eigenschaften wesentlich über herkömmliche Formkörper auf Stärkebasis hinausgehende Eigenschaften dadurch erreicht werden, daß ein Teil der Stärke mit Wasser vorverkleistert wird und der viskosen Masse die vorverkleisterte Stärke beigegeben wird, wobei die Anteile sich, wie bereits oben erläutert, in einer Versuchsreihe aus den Fig. 4 und 5 (Anteil Gesamtstärke) ergeben. Die Anteile von nativer Stärke, vorverkleisterter Stärke und Wasser beziehen sich jeweils auf die Trockenmasse des Altpapieres.

Im Rahmen des erfindungsgemäßen Verfahrens hat es sich neben der Verwendung von nativer und modifizierter bzw. vorverkleisterter Stärke hinsichtlich Oberflächengüte, Elastizität, Gefügestruktur und Festigkeit der fertigen Formkörper als besonders vorteilhaft herausgestellt, wenn Fasermaterial unterschiedlicher Länge, insbesondere Faserbündel unterschiedlicher Länge oder auch Mischungen längerer Faserbündel mit kürzeren Einzelfasern, verwendet werden. Die Faserlänge wird für dünnwandige Formkörper vorzugsweise im Bereich zwischen 0,5 und 5 mm gewählt, wobei ein Überblick über die Faserfraktionen (Klassierung) in Fig. 6 gegeben ist.

In einer Modifikation des Verfahrens nach Fig. 1 ist es auch möglich, die Zerkleinerung des Altpapieres, gegebenenfalls unter Zugabe von nativer Stärke sowie Füllstoffen, nicht in trokkenem Zustand vorzunehmen, sondern bereits die mechanische Zerkleinerung in Anwesenheit von Wasser in einem entsprechenden Zerkleinerungsmischer vorzunehmen.

Hinsichtlich des Einsatzes eines Anteiles vorverkleisterter Stärke kann auch eine auf die Backtechnologie abgestimmte, modifizierte Stärke eingesetzt werden.

Für die weitreichende Verwendbarkeit des so backtechnisch hergestellten Formkörpers zum Ersetzen von nicht-biologisch abbaubaren Kunststoff-Verpackungen, z.B. zur Verpackung von feuchtigkeitenthaltenden Lebensmitteln oder als Einweg-Verpackungen zur ambulanten Aufnahme von Suppen, Salaten oder auch anderen festen, hygroskopischen Lebensmitteln ist es aber erfoderlich, daß der Formkörper auch hinreichend feuchtigkeitsbeständig ist, ohne grunsätzlich seine biologische Abbaubarkeit zu verlieren.

Hierzu ist vorzugsweise vorgesehen, den gebackenen Formkörper entweder in einem "In-line"-Prozeß, gegebenenfalls unter Entnehmen des Formkörpers aus der Backform aber Einsetzen desselben in einen anderen Abschnitt der Backvorrichtung, hydrophob zu imprägnieren bzw. zu beschichten, wobei dies auch außerhalb der Backvorrichtung und, in Abhängigkeit von dem konkreten Beschichtungsvorgang unter Ausnutzung der Prozeßwärme des Backvorganges am noch heißen oder auch bereits abgekühlten Formkörper erfolgen kann.

Vorzugsweise wird, jedenfalls für ein "In-line"-Beschichtungsverfahren unmittelbar benachbart zu der Backform und innerhalb der Backvorrichtung ein gemeinsamer Antrieb und eine abgestimmte Steuerung zwischen Backprozeß und anschließendem Beschichtungsvorgang, gegebenenfalls unter Einsatz einer Handhabungseinrichtung zum Entnehmen des gebackenen Formkörpers aus der Backform und zum Einsetzen in eine Beschichtungsvorrichtung vorgesehen.

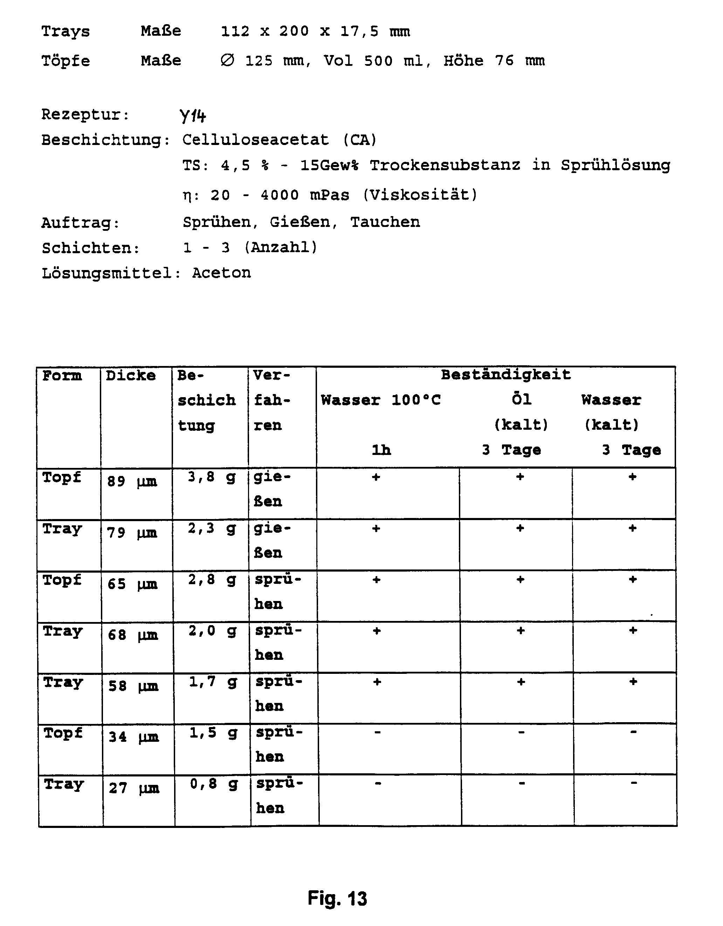

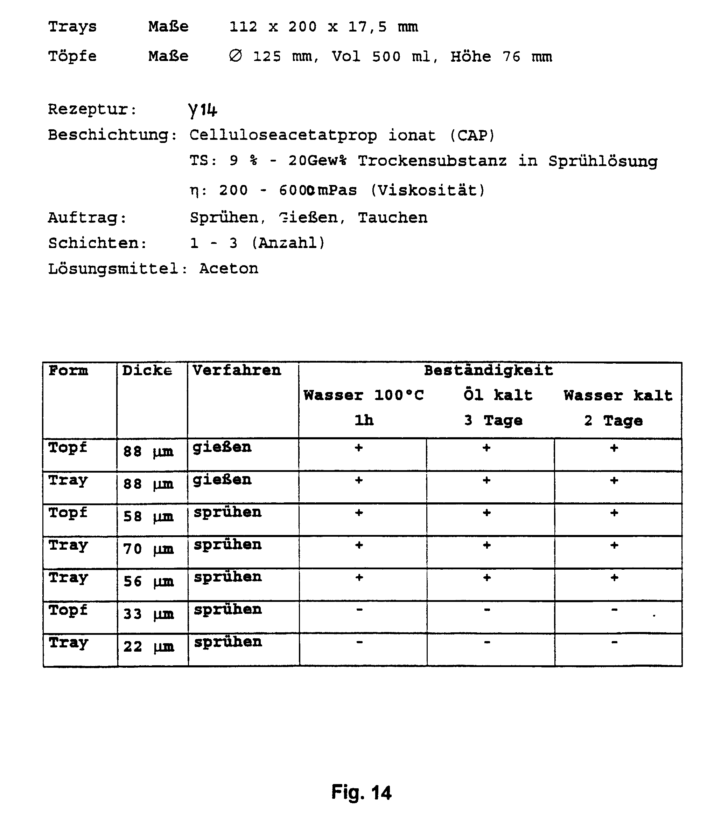

Bevorzugte Verfahren zur Hydrophobierung des gebackenen Formkörpers durch Aufbringen einer hydrophoben Imprägnierung bzw. Beschichtung bestehen zum einen (ggf. mehrfachen) Auftragen einer Sprühlösung, die als hydrophobe Substanz Celluloseacetat (CA) oder Celluloseacetatpropionat (CAP) oder eine Mischung aus beiden Stoffen enthält und durch Sprühen, Gießen oder Tauchen innen und/oder außen auf den Formkörper aufgebracht wird, wobei in Abhängigkeit vom erforderlichen Maß der hydrophoben Eigenschaften ein wasser- oder fettabweisender Auftrag ohne Ausbildung einer zusammenhängenden Randschicht erfolgt (z.B. für Hamburger-Verpackungen), oder auch bei größeren Schichtdicken eine tatsächliche Flüssigkeitsdichtigkeitdichtheit und Ausbildung einer kontinuierlichen Randschicht (Barriereschicht) gewährleistet werden kann. Ausführungsbeispiele hierzu sind in Fig.13 und 14 dargestellt.

Celluloseacetat wird dabei vorzugsweise in einem Anteil Trokkensubstanz in der Sprühlösung von 4,5 Gew.-% bis 15 Gew.-% mit Aceton als Lösungsmittel bei einer Viskosität der Sprühlösung zwischen 20 und 4000 mPas verwendet, während Celluloseacetatpropionat in einem Gewichtsverhältnis vorzugsweise von 9 Gew.-% bis 20 Gew.-% Trockensubstanz in der Sprühlösung, die eine Viskosität von vorzugsweise 200 bis 6.000 mPas aufweist, verwendet wird, wobei ebenfalls vorzugsweise Aceton als Lösungsmittel dient. Das Aufsprühen gibt einen sehr gleichmäßigen Auftrag und damit einen besseren hydrophoben Schutz bei dünneren Schichten.

Die Barriereschichten aus Celluloseacetat und Celluloseacetatpropionat werden dabei ohne Weichmacher und vorzugsweise auch ohne Haftvermittler aufgetragen und es hat sich überraschend gezeigt, daß diese hydrophobe Imprägnierung auch bei einem verhältnismäßig hohen Faseranteil des Formkörpers hervorragende Haftungseigenschaften besitzt. Mit einer solchen Beschichtung sind sämtliche Probleme, die mit einer Migration von Weichmacher aus dem Polymerverbund in die verpackten Lebensmittel einhergehen könnten, von vornherein und grundsätzlich vermieden.

Gegebenenfalls ist es selbstverständlich auch möglich, die Imprägnierung unter Vermittlung durch eine Haftmittel aufzutragen.

Gleichzeitig mit der Hydrophobierung oder im Anschluß daran kann der Formkörper mit Wasserdampf konditioniert werden (Erhöhen der Flexibilität durch Feuchteeintrag).

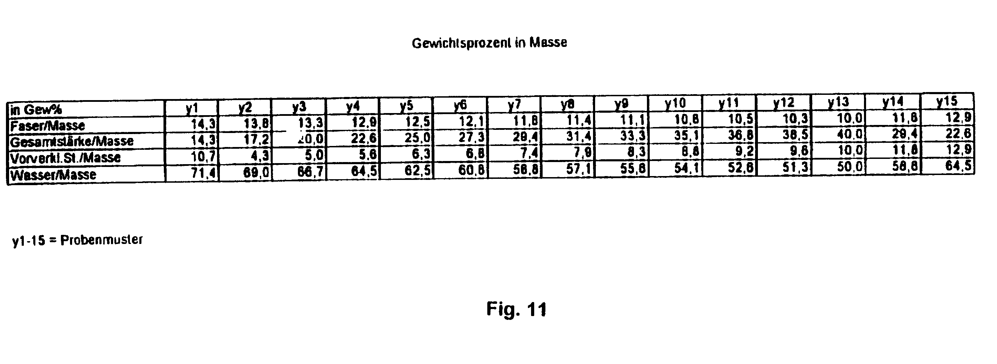

Die in Fig.11 anhand weiterer Probenmuster dargestellt, kann das Verfahren, insbesondere unter dem Einsatz von Rohfasermaterial, auch mit erhöhtem Stärkeanteil bei verringertem Fasermaterialanteil sowohl im Hinblick auf die vorerwähnte CA- bzw. CAP-Imprägnierung als auch im Hinblick auf die nachstehend noch erläuterten Beschichtungsverfahren durchgeführt werden.

Alternativ zum Auftrag der vorgenannten Stoffe (ohne Weichmacher) als Lösungs-Beschichtung sind auch ausgezeichnete Ergebnisse mit einer Beschichtung der Formkörper durch Folien auf der Basis von Polyester, Polyesteramid oder Polymilchsäure erzielt worden, wobei insbesondere elastische Folie sich als außerordentlich haftfähig erwiesen hat. Eine solche Folienbeschichtung kann unter Druck oder Vakuum erfolgen, wobei bei tiefen Formen vorzugsweise eine Vordehnung der Folie mittels eines Druckstempels erfolgt und entweder die Folie an ihrer dem Formkörper zugewandten Haftseite vorerwärmt wird oder der noch warme Formkörper (Ausnutzung der Prozeßwärme bzw. der Restwärme des Formkörpers aus dem Backvorgang) zur Verbesserung der Folienanhaftung erwärmt wird.

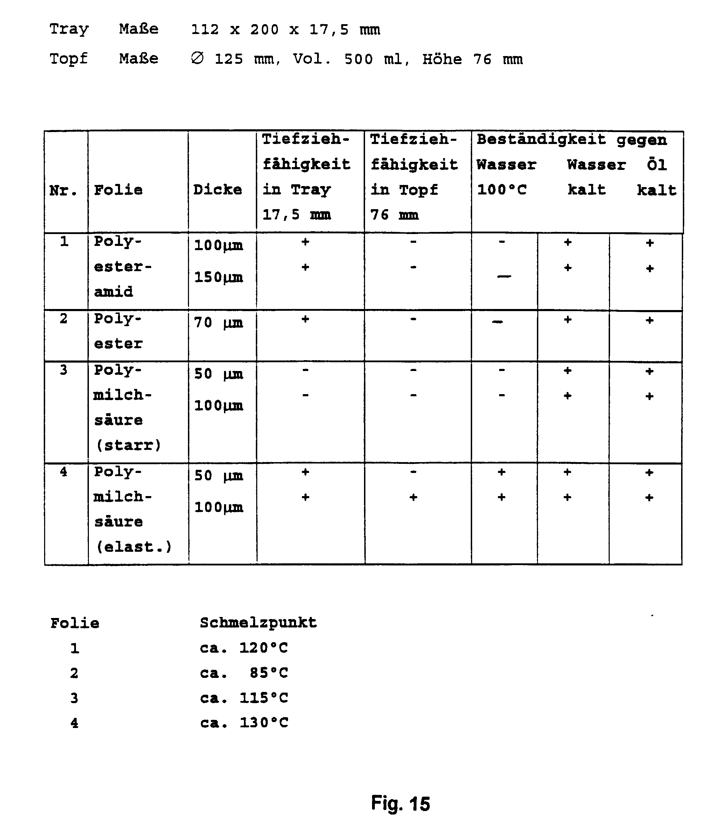

Diese Folien können ein- oder mehrschichtig sein und sowohl mit als auch ohne Weichmacher verwendet werden, und auch mit Haftvermittler oder unter Verzicht auf den Einsatz eines Haftvermittlers aufgebracht werden. Hierzu wird auf die Ausführungsbeispiele gem. Tabelle Fig.15 verwiesen. Die Folienbeschichtung führt praktisch stets zu einer flüssigkeitsdichten Beschichtung, die teilweise, insbesondere bei Verwendung von Folie auf der Basis von Polymilchsäure (elastisch) auch zu kochwasserfesten Eigenschaften führt.

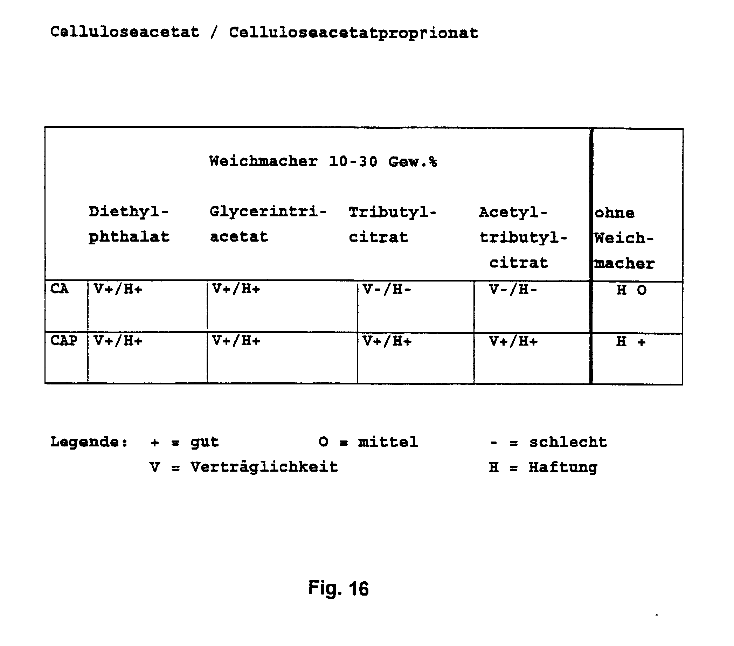

Für die vorerwähnte Sprühbeschichtung mit Celluloseacetat bzw. Celluloseacetatpropionat zeigt Fig.16 einerseits herkömmliche Lösungen (Verwendung eines Weichmachers mit 10 bis 30 Gew.-%) und der der erfindungsgemäßen Verwendung von CA bzw. CAP ohne Weichmacher, wobei sich bei Verwendung von Celluloseacetat eine mittlere Haftfähigkeit ergab, während sich bei Verwendung von Celluloseacetatpropionat überraschend eine ausgezeichnete Anhaftung ohne hydrophobe Weichmacher ergeben hat.

In einem alternativen Verfahrensablauf (Verfahren II) kann in Verbindung mit dem Wasserdampf-Konditionieren zugleich auch ein Beschichten des gebackenen Formkörpers durch Aufsprühen eines biologisch, abbaubaren, flüssigkeitsdichten Materiales erfolgen. Anschließend erfolgt auch hier vorzugsweise eine Sterilisation des Formkörpers mit Heißdampf.

In noch einer weiteren Ausführungsform kann die Ausbildung einer die biologische Abbaubarkeit des Gesamtproduktes nicht gefährdenden, flüssigkeitsdichten Randschicht bzw. durchgehende Gesamtimprägnierung des Formkörpers auch dadurch erfolgen, daß in die viskose Rohmasse als fein verteilbares Fluid, Pulver oder Granulat das Einsatzmaterial (CA, CAP, Polyester, Polyesteramid, Polymilchsäure) eingebracht und dieses während des Backvorganges, gegebenenfalls unter Aufschmelzen und Einbettung in den sich ausbildenden Faser-Stärke-Verbund, im wesentlichen gleichmäßig in dem Formkörpermaterial verteilt wird und nach Abschluß des Backvorganges zu einem flüssigkeitsdichten, gleichwohl biologisch abbaubaren Formkörper führt.

Das Verfahren nach Fig. 1 kann hinsichtlich der sich dort an den Backvorgang anschließenden Aufbringung einer flüssigkeitsdichten Beschichtung daher auch so abgewandelt werden, daß das gegen Gaspermeation oder das Eindringen von Flüssigkeit eine Barriereschicht bildende Material in einem vorhergenden Verfahrensschritt bereits der Vorbereitung der Backmasse beigegeben wird, und unter Hydrophobierung der Backmasse zu einem integral flüssigkeitsdichten Formkörper führt.

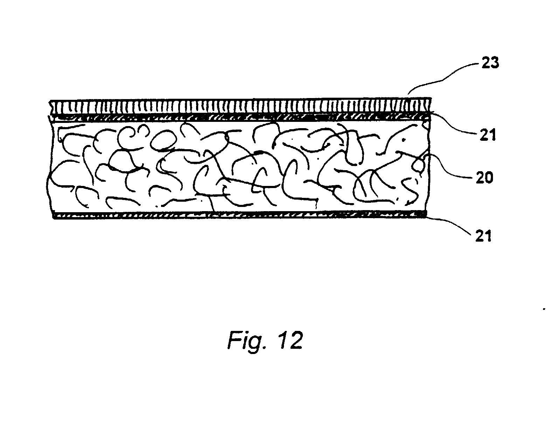

Fig. 12 zeigt schematisch einen Querschnitt durch einen Wandabschnitt des nach dem Verfahren gemäß Ausführungsbeispiel 1 hergestellten Formkörpers. Aufgrund der Dampfbildung und entstehenden Überdruckes innerhalb der Formkörpermasse während des Backvorganges entsteht eine aufgelockerte, beiderseits durch eine Hautschicht 21 begrenzte Grundmaterialschicht 20, in der sich in Verbindung mit einem Gemisch aus lang- und kurzfasrigen, biologisch abbaubaren Fasern oder Faserbündeln ein Stärke-Fasermaterial-Gerüst ausbildet. An die obere Hautschicht 21 schließt sich die flüssigkeitsdichte Beschichtung 23 an. Ggf. kann eine Haftvermittlerschicht zwischengeschaltet sein. In diesem Fall ist der Formkörper, nur einseitig (z.B. an einer höher beanspruchten Innenoberfläche) mit der hydrophoben Beschichtung 23 versehen. Selbstverständlich kann die hydrophobe Beschichtung 23 (die die Flüssigkeitsdichtigkeit dieser Beschichtung einschließt), gegebenenfalls in unterschiedlicher Qualität hinsichtlich ihrer Barriereeigenschaften auch auf beiden Hautschichten 21, also vorzugsweise innen und außen auf dem Formkörper ausgebildet werden. Die Barriereschicht bzw. flüssigkeitsdichte Beschichtung 23 kann auch beiderseits der Grundmaterialschicht 20 unterschiedliche Eigenschaften oder Dicke haben, bzw. aus unterschiedlichem, hydrophobem Material bestehen.

Vorzugsweise kann die hydrophobe Imprägnierung bzw. Beschichtung durch Tauchen des Formkörpers in das Beschichtungsmaterial oder Aufsprühen einer hydrophoben Lösung mit Celluloseacetat oder Celluloseacetatpropionat ggf. auch erfolgen. Hinsichtlich der Folienbeschichtung gem. Fig.15 erfolgt der Auftrag durch Anhaften der Folie unter Vakuum, mittels Druckluft oder durch mechanisches Aufpressen, wobei Randüberstände der Folie zusammen mit einem Säubern des gebackenen Formkörpers von Materialresten aus den Abdampfkanälen beseitigt werden.

Gegebenfalls kann auch zur Ausbildung einer nur an der Innenseite des Formkörpers sich befindenden hydrophoben, insbesondere flüssigkeitsdichten Randschicht eine Schmelze aus einem der vorgenannten hydrophoben Materialien auf einen in der Backform befindlichen Formling aufgebracht und der Formkörper unter Ausbildung der Randschicht gebacken werden.

Die Dicke der flüssigkeitsdichten, biologisch abbaubaren Randschicht liegt vorzugsweise im Bereich von 5 µm bis 200 µm, bei der Verwendung von Folien z.B. im Bereich von 20 µm bis 200 µm.

In Abhängigkeit von der gewünschten Barrierewirkung und Beständigkeit kann die hydrophobe Imprägnierung oder Folienbeschichtung auch als Mehrfachbeschichtung aufgebracht werden, wobei die entweder integral durch die Hydrophobierung der Backmasse ausgebildete, flüssigkeitsdichte Randschicht oder die als nach dem Backvorgang aufgebrachte Beschichtung ausgebildete flüssigkeitsdichte Randschicht eine Barrierewirkung gegenüber Flüssigkeiten, insbesondere gegenüber Wasser, sauren Lebensmitteln Milchsäure oder Fetten aufweist. Gegebenenfalls kann die Beschichtung auch gasdicht, insbesondere permeationsfest gegenüber Wasserdampf oder Sauerstoff sein.

Bei der Folienbeschichtung mit Folie auf Basis von Polyester, Polyesteramid oder Polymilchsäure kann diese von Rollen oder Bögen entnommen werden. Die Folie kann, gegebenenfalls unter Einsatz eines Haftvermittlers auf den noch vom Backvorgang heißen Formkörper, gegebenenfalls unter einer Anschmelzverbindung aufgebracht oder auch auf den abgekühlten Formkörper unter Vakuum, mit Hilfe von Druckluft oder mechanisches Aufpressen aufkaschiert werden.

In anderen Ausführungsbeispielen kann das hydrophobe Material als Pulver oder Granulat oder in Form von Pellets vorliegen und der Formkörper unter Bepulvern, Aufsprühen oder Tauchen mit der hydrophoben Beschichtung versehen werden, oder es kann unmittelbar eine Hydrophobierung durch Einbringen dieser Materialien in die Backmasse vor dem Backvorgang alternativ zu dem in Fig. 1 dargestellten, anschließenden Beschichten des Formkörpers zur Ausbildung einer flüssigkeitsdichten Randschicht erfolgen. Vorzugsweise wird das Material aufgeschmolzen und ist hierzu der Formkörper noch vom vorhergehenden Backvorgang heiß.

Es ist ferner vorteilhaft, die Oberflächendichte des beschichteten Formkörpers unter Verringerung der Porigkeit zur Erzielung einer glatten Oberfläche zu erhöhen, z.B. durch einen nachgeordneten (Fein-)Preßvorgang, um so die Barrierewirkung der Beschichtung z.B. gegen Heißwasser, heiße Fette oder dergleichen weiter zu erhöhen. Bei Verwendung eines Haftvermittlers zwischen der Oberfläche des Formkörpers und der flüssigkeitsdichten Beschichtung kann dieser vorzugsweise aus Nitrocellulose oder Polyvinylalkohol bestehen, im letzteren Falle zugleich mit gassperrender Wirkung.

Bei konkaven Verpackungs-Formkörpern, z.B. in Schüsselform, ist die hydrophobe Beschichtung bzw. Ausbildung als Randschicht zumindest innen vorgesehen, gegebenenfalls aber auch außen, wobei die Innenoberfläche des Verpackungs-Formkörpers gegebenenfalls höheren Anforderungen an die Barrierewirkung ihrer Oberflächenschicht im Hinblick auf Temperatur- und Fettbeständigkeit unterworfen ist, als die Außenoberfläche, für die möglicherweise insbesondere eine Feuchte- und Klimabeständigkeit für einen hinreichenden Zeitraum ausreicht.

In einer anderen Ausführungsform der hydrophoben Imprägnierung im Anschluß an den Backvorgang wird bevorzugt, daß Material als Emulsion oder als Lösung auf den gebackenen Formkörper aufzubringen, wobei die Schicht nach dem Auftragen aushärtet und, gegebenenfalls unter spezieller Nach-Wärmebehandlung getrocknet wird.

Die Lösung enthält neben hydrophoben Stoff Celluloseacetat und/oder Celluloseacetatpropionat vorzugsweise ein leicht flüchtiges Lösungsmittel. So kann z.B. eine kalte Lösung, die als Lösungsmittel Aceton oder Ethylacetat enthält, auf den vorzugsweise abgekühlten Formkörper aufgesprüht oder dieser in die Lösung eingtaucht werden.

In Abhängigkeit vom Einsatzzweck und von entsprechenden Anwendungsklassen wird die innere und/oder äußere flüssigkeitsdichte Beschichtung des Formkörpers vorgenommen bzw. während des Backvorganges durch vorherige Zumischung die Ausbildung einer hydrophoben Charakteristik des Formkörpers mit flüssigkeitsdichter Randschicht gewährleistet. Dabei reichen die Anwendungsklassen von der niedrigsten Anforderungsstufe A1 (Raumtemperatur 25-40°C, relative Luftfeuchtigkeit von 0-90%), Barrierewirkung der hydrophoben Randschicht mehrere Tage über die Anwendungsklasse A2 kalt-wasserfest auch bei Raumtemperatur (25-40°C), für 24 Stunden bis zu einer Anwendungsklasse A3 die Kochwasserfestigkeit bei 95°C bis zu einer Stunde gewährleistet. Für die einzelnen Anwendungsklassen ist das Beschichtungsmaterial auch hinsichtlich Schichtdicke und angewendeter Konzentration unterschiedlich.

Die niedrigste Anwendungsklasse A1 kommt insbesondere für eine Außenbeschichtung des Formkörpers dann in Betracht, wenn dieser zugleich durch einen Deckel verschließbar ist, oder zur Beschichtung innen und außen, wenn der Verpackungsformkörper offen bleibt. In Abhängigkeit vom Einsatzzweck wird für die Innenausstattung des Verpackungsformkörpers die Anwendungsklasse A2 (kaltwasserfest) oder A3 (kochwasserfest) vorgesehen, wobei die Außenbeschichtung entsprechend niedrigere oder auch gleiche Anwendungsklassen hinsichtlich der Beschichtungsqualität aufweisen kann.

Eine Feuchtigkeitsaufnahme des Formkörpers kann auch dadurch verringert werden, daß im Ergebnis des Backvorganges eine wesentlich dichtere Hautschicht (vgl. die schematische Darstellung in Fig. 12) durch entsprechenden Trennmitteleinsatz (vollständig hydrierte Fette oder Wachse) während des Backvorganges erreicht wird.

Vorzugsweise wird vor der Anwendung einer hydrophoben Beschichtung auf den gebackenen Formkörper dieser einer Grundierung mit einem Füllmaterial unterzogen, um die Porenstruktur des gebakkenen Formkörpers zu verschließen, wobei als Füllematerialien z.B. Wachse, Polymere, Fettstoffe dienen können und diese Grundierung zugleich als Haftvermittler zur Haftverbindung der hydrophoben Schicht dient, wobei die Haftvermittlerschicht ebenfalls durch z.B. Tauchen, Aufsprühen und/oder Erwärmen aufgebracht werden kann.

Für eine höhere Anwendungsklasse (z.B. A3) wird die hydrophobe Beschichtung mit höherer Konzentration (z.B. 50%ig) durchgeführt und auch mehrfach (z.B. dreimal) aufgebracht. Für geringe Erfordernisse hinsichtlich der Barrierewirkung in der gleichen Anwendungsklasse (z.B. A3) genügen auch niedrigere Konzentrationen und kann zumeist ein Mehrfachauftrag entfallen.

Die Ausbildung der hydrophoben, ggf. flüssigkeitsdichten Randschicht durch Hydrophobierung der Backmasse oder Auftragen der hydrophoben Beschichtung muß zugleich die Siegelfähigkeit (Deckelversiegeln) gestatten und soll in unkomplizierter Weise auch die Farbgebung bzw. das Bedrucken des Formkörpers berücksichtigen.

Vorzugsweise ist an der Außenseite des Formkörpers ein Indikator für Feuchte und/oder Zeit vorgesehen, um die während der Produkt-Lebensdauer gegebene Barrierewirkung anzuzeigen.

Im Hinblick auf die biologische Abbaubarkeit des Formkörpers, die auch durch die hydrophobe Randschicht nicht beeinträchtigt wird, kann es vorteilhaft sein, nach Gebrauch den Verpackungskörper zu zerkleinern, um hierdurch die biologische Abbaubarkeit des Formkörpers weiter zu beschleunigen.

Gegebenenfalls können die Formkörper zum Versand mit einer Schrumpffolie als zusätzlichen Schutz aus einem der vorgenannten biologisch abbaubaren Materialien umhüllt werden.

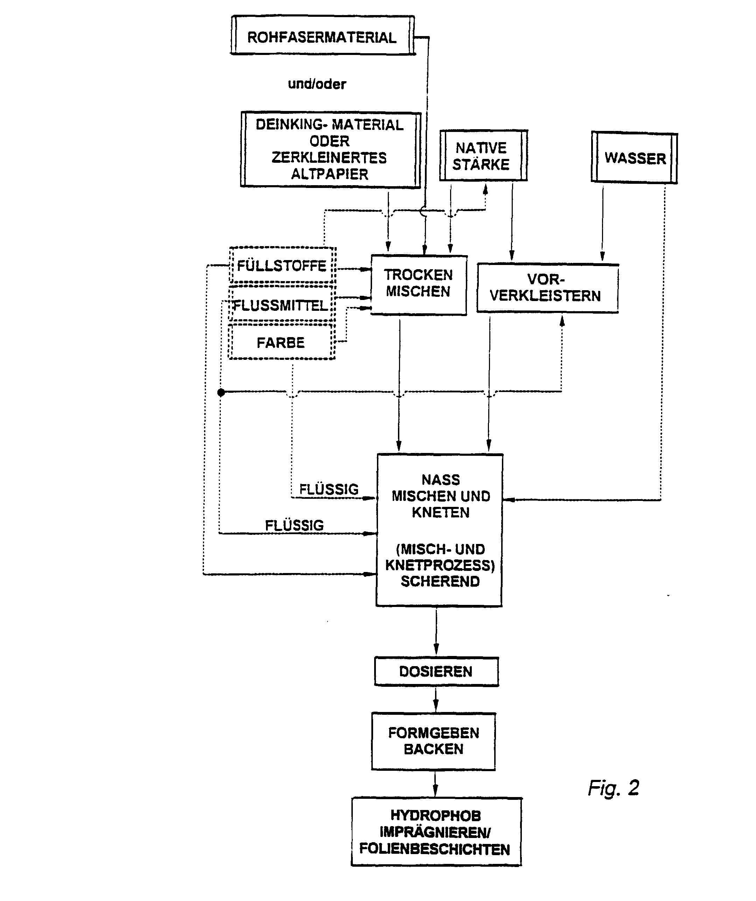

Ein weiteres Ausführungsbeispiel des erfindungsgemäßen Verfahrens wird nachstehend anhand von Fig. 2 erläutert.

Als Ausgangsmaterial (biologisch abbaubare Fasern enthaltendes, faserhaltiges Rohmaterial, insbesondere Zellulosefasern enthaltendes Material pflanzlichen Ursprungs) wird hier Deinking-Material, d.h. entfärbtes Altpapier, das sich bereits in einem pulver- bis kleinschnitzelförmigen Zustand befindet, verwendet, obwohl auch dieses Verfahren (unter Einschaltung eines Zerkleinerungsschrittes) mit Altpapier als Rohmaterial, wie im Verfahren nach Fig. 1, oder mit anderem biologisch abbaubare Fasern enthaltenen Fasermaterial (Rohmaterial) durchgeführt werden kann.

Bei diesem Verfahren wird der bereits hinreichend zerkleinerte Deinking-Stoff (oder auch Rohmaterial) trocken oder feucht mit einem Teil nativer Stärke, gegebenenfalls wie in dem Verfahren nach Fig. 1 unter Zugabe von Füllstoffen (die auch als Premix mit der nativen Stärke zugegeben werden können), sowie gegebenenfalls unter Zugabe von Flußmittel der vorerwähnten Art und/oder Farbstoffen vorgemischt, während ein anderer Anteil nativer Stärke mit Wasser vorverkleistert wird. Die trockene Vormischung erlaubt eine hohe Egalisierung und Homogenisierung der Masse und wird gefolgt von dem weiteren Verfahrensschritt des Misch- und Knetprozesses unter Anwesenheit von Wasser zur Aufschließung des Deinking-Materiales auf seine Faserstruktur, d.h. vorzugsweise auf aufgelockerte Faserbündel zur Ausbildung einer egalisierten viskosen Masse, der zusätzlich der Anteil vorverkleisterter Stärke unter Berücksichtigung der in Verbindung mit dem Verfahren nach Fig. 1 und den Fig. 4a, 4b; 5a, 5b, Fig.10, Fig.11 angegebenen Mischungsverhältnisse von Wasser, Fasermaterial, nativer und vorverkleisterter Stärke, beigegeben ist. Wie in Verbindung mit dem Ausführungsbeispiel bereits dargelegt, kann insbesondere durch Beigabe in die trockene Vormischung auch bereits eine Hydrophobierung des Materiales und Ausbildung der hydrophoben Randschicht während des Backprozesses erfolgen.

Gegebenenfalls können Flußmittel auch dem in Anwesenheit von Wasser ablaufenden Misch- und Knetprozeß beigegeben werden, wie dies auch für die Füllstoffzugabe oder die Zugabe von Farbstoffsuspensionen gilt. Auch in diesem Fall wird eine möglichst schonende und nicht-schneidende Zerlegung des Deinking-Materiales auf seine Faserstruktur, insbesondere unter Bildung verhältnismäßig großer, aufgelockerter Faserbündel bewirkt, wobei noch verbesserte Formkörpereigenschaften durch die gezielte Verwendung egalisierten Materiales, d.h. von Faserbündelgemischen unterschiedlicher Faserlänge erreicht werden kann.

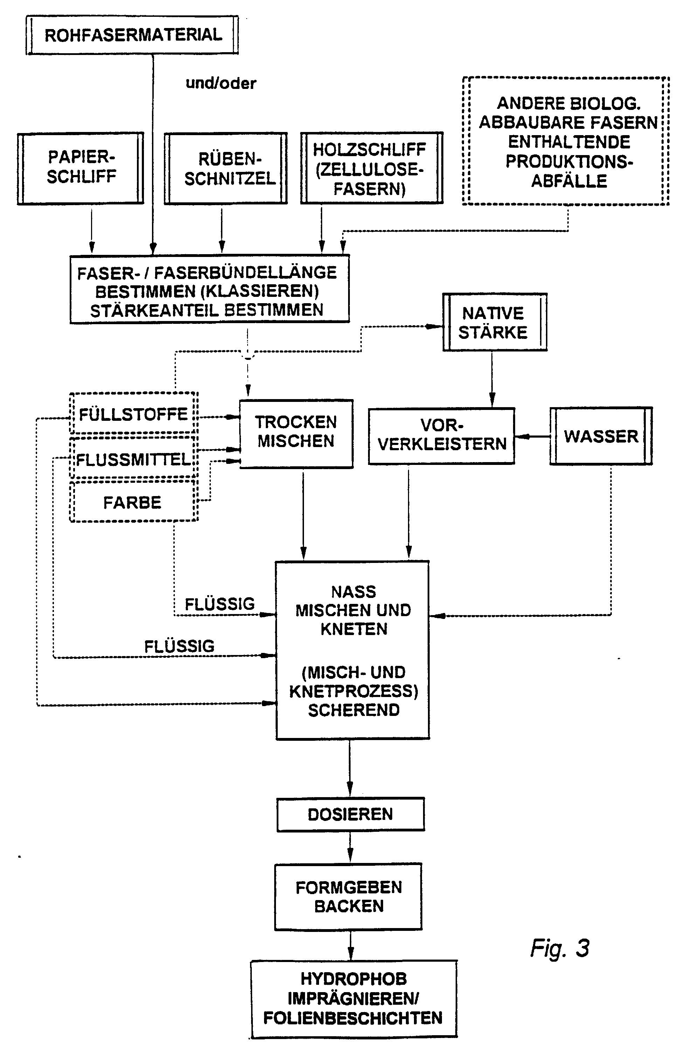

Die Trockenmischung der Bestandteile Altpapier und/oder Deinking-Material (oder auch andere zellulose- und stärkehaltige Produktionsrückstände als faserhaltiges Rohmaterial, siehe Verfahren nach Fig. 3, oder auch Rohfasermaterial) mit Stärke führt zu einer Verbesserung der Oberflächenqualität des Formkörpers.

Die übrigen Verfahrensschritte Dosieren sowie Backprozeß (gegebenenfalls unter vorheriger Formgebung) entsprechen den bereits anhand von Fig. 1 erläuterten, abschließenden Verfahrensschritten zur backtechnischen Herstellung der Formkörper, insbesondere für Verpackungszwecke sowie der sich anschließenden, hydrophoben Beschichtung des Formkörpers in der bereits erläuterten Weise

Wie bereits in Verbindung mit dem Verfahren nach Fig. 1 erläutert, wird durch die Verwendung eines Gemisches aus vorverkleisterter Stärke und nativer Stärke, insbesondere durch den vorverkleisterten Anteil, die Elastizität des ausgebackenen Formkörpers maßgeblich bestimmt. Hinsichtlich der Mengenverhältnisse, die sich als vorteilhaft gezeigt haben, wird auf die Fig. 4a,4b; und Fig.5a,5b, Fig.10,Fig.11, verwiesen.

Durch den anhand von Fig. 7 erläuterten Dampfdruck, der während des Backprozesses in der Backform herrscht (repräsentiert durch die Formschließkraft der Backform), wird die Oberfläche des Formkörpers ebenfalls mitbestimmt. Dieser Dampfdruck ist abhängig von dem Anteil nativer Stärke und der Feuchte der viskosen Masse.

Der Dampfdruck in der Backform kann durch Steuerung der Dampfabfuhrkanäle in der Backform hinsichtlich Querschnitt und Lage bis hin zur Verwendung von Steuerventilen in der gewünschten Weise gesteuert werden.

Gegebenenfalls kann auf zusätzliche Wasserzugabe in den Mischund Knetprozeß zur Herstellung der viskosen Masse (in Fig. 2 gestrichelt dargestellt) vollständig verzichtet werden, so daß die Feuchte der Masse und damit auch der Wasseranteil zur Verkleisterung der nativen Stärke durch den Wasseranteil der eingesetzten vorverkleisterten Stärke bestimmt wird. Auf diese Weise können auch die Dampfdruckverhältnisse während des Backprozesses und damit die Oberflächenqualität der Formkörper kontrolliert werden. Die native Stärke wird vorzugsweise im Mischprozeß mit den weiteren Bestandteilen der Trockenmasse zugegeben, kann aber auch zumindest teilweise direkt in den die Faserbündelzerlegung bewirkenden und die viskose Masse egalisierenden Misch- und Knetprozeß eingeführt werden (in Fig. 2 ebenfalls gestrichelt dargestellt). Diese weiteren Bestandteile sind im vorliegenden Fall trocken zerkleinertes Altpapier und/oder Deinking-Material, alternativ zusätzlich Flußmittel und/oder Füllstoffe.

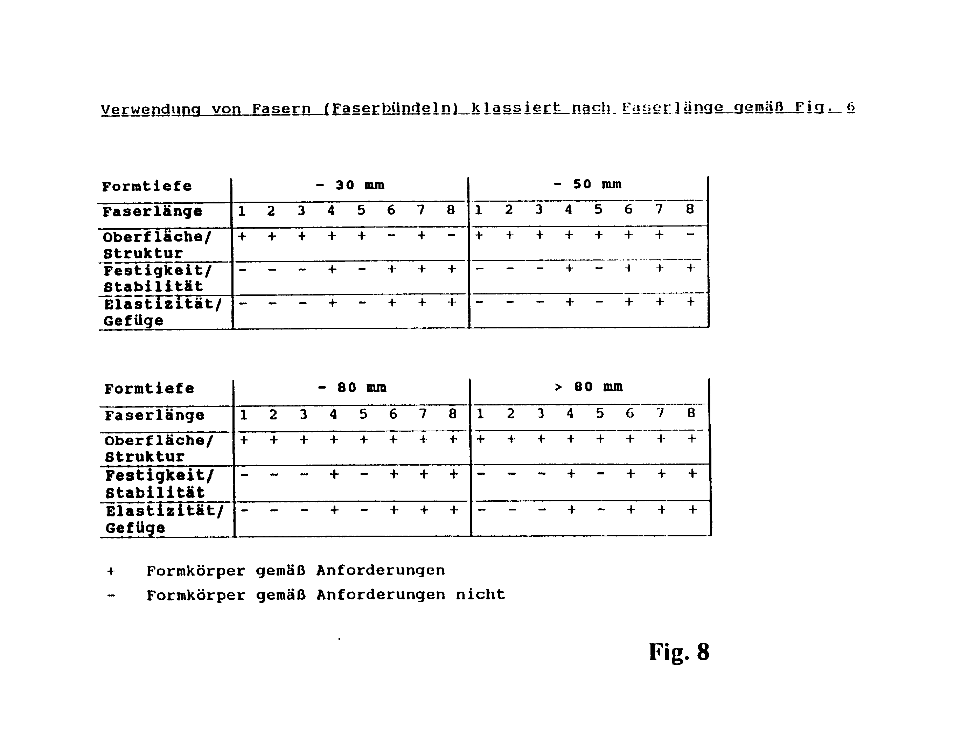

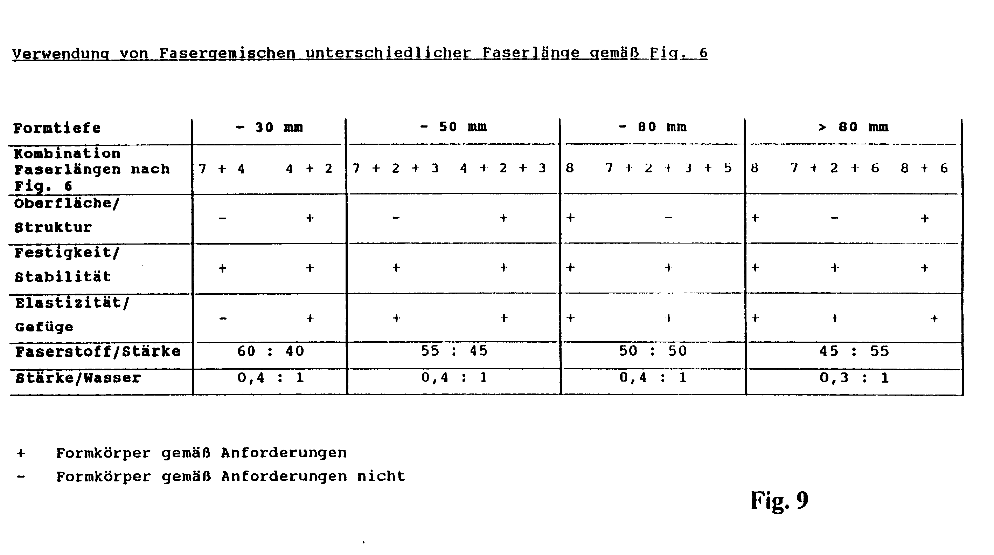

Die Struktur und damit auch die Festigkeit der Formkörper wird durch das Verhältnis von Stärke zu Altpapier bzw. Deinking-Material wesentlichen bestimmt, ebenso wie durch die Länge der verwendeten Faserbündel bzw. Fasern, die sich wesentlich auf unterschiedliche Festigkeiten auswirkt, wie Untersuchungen von Vergleichsmustern zeigen, die in Fig. 8 und 9 dargestellt sind.

Insbesondere hat sich gezeigt, daß die Verwendung von faserhaltigem Material mit biologisch abbaubaren Fasern unterschiedlicher Faserlänge, d.h. Faserbündel bzw. Fasergemische mit unterschiedlichen Faserlängen im Bereich von 0,5 mm bis ca. 10 mm, insbesondere für dünnwandige Formkörper, vorzugsweise im Bereich von 1 mm bis 5 mm, sehr vorteilhafte Ergebnisse hinsichtlich der Festigkeit unter Berücksichtigung unterschiedlicher Formkörpergeometrien und Formtiefen der Backform ergibt.

Es hat sich gezeigt, daß durch ein Gemisch von kurzen und langen Fasern bzw. kurzen und langen Faserbündeln oder auch durch ein Gemisch langer Faserbündeln und kurzer Fasern in Verbindung mit dem Einsatz hinsichtlich des Backprozesses modifizierter oder vorverkleisterter Stärke und nativer Stärke die Festigkeit der Formkörper überraschend stark erhöht werden kann (s. Fig. 9).

Generell wurde ermittelt, daß bei einem hohen Anteil nativer Stärke im Verhältnis zu vorverkleisterter oder modifizierter Stärke eine gute Oberfläche, aber nur eine verhältnismäßig geringe Elastizität der Formkörper erreicht werden kann, während ein sehr hoher Anteil von vorverkleisterter oder modifizierter Stärke im Verhältnis zu nativer Stärke zu einer guten Elastizität, aber schlechterer Oberfläche des Formkörpers führt.

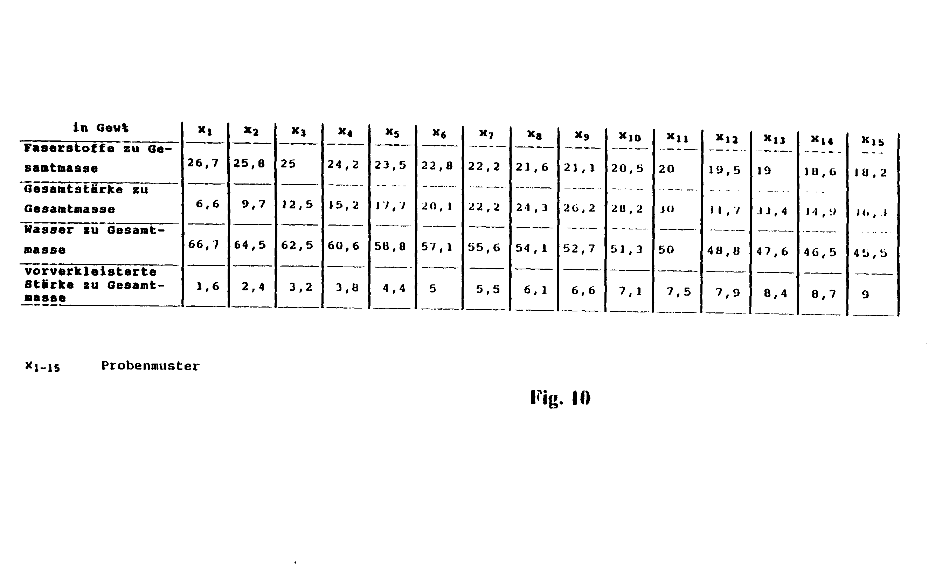

Hinsichtlich der jeweiligen Anwendung und Formkörpergeometrie ist daher das Verhältnis von nativer zu vorverkleisterter Stärke (vorzugsweise 3 : 1) unter Berücksichtigung der Faserlängen des faserhaltigen Materiales bzw. des Gemisches unterschiedlich langer Fasern oder Faserbündel anzupassen, wobei sich besonders vorteilhafte Verhältnisse auch im Hinblick auf einen verhältnismäßig kurzen Backprozeß von zwischen 0,5 und 3 Minuten bei ca. 150°C bis 200°C in Formkörpern gezeigt haben, deren Komposition in Fig. 10, Fig.11 dargestellt ist.

Ein weiteres Ausführungsbeispiel des erfindungsgemäßen Verfahrens ist in Fig. 3 dargestellt, wobei hier als Ausgangsmaterial Zellulosefasern Papierschliff, Rübenschnitzel und Holzschliff (Zellulosefasern) als beispielshafte Vertreter von Produktionsabfällen gewählt sind, wobei hierfür auch andere biologisch abbaubare Fasern enthaltende Produktionsabfälle, insbesondere auf Zellulosebasis, verwendbar sind.

Im Rahmen des erfindungsgemäßen Verfahrens können selbstverständlich auch jeweils direkt bereits aufgeschlossene, biologisch abbaubare Faserstrukturen (Rohfasermaterial), insbesondere Faserbündel, in einer Länge zwischen 0,5 mm und ca. 50 mm (höhere Werte für großflächige und/oder dickwandige Verpakkungsformkörper), vorzugsweise zwischen 1 mm und 5 mm (insbesondere für dünnwandige, leichte Verpackungsformkörper) verwendet werden.

Fig. 3 verdeutlicht, daß das Verfahren auch unter Verwendung von Misch-Rohstoffen aus der Papier-, Lebens- oder Futtermittelindustrie bzw. verschiedenen Recyclingstoffen aus Altpapier durchgeführt werden kann, wobei in Fig. 3 diese Materialien bereits hinreichend zerkleinert, insbesondere unter Einsatz von Shreddern, Häckslern oder Schlagmühlen wie Stiftmühlen oder Hammermühlen, d.h. möglichst unter Zerreißen und nicht-schneidender Verarbeitung zur Schonung der Fasern (und zur Verminderung der Wasseraufnahme von Zellulosefasern) zerkleinert sind, wobei das zerkleinerte Rohmaterial in einem weiteren Verfahrensschritt zunächst hinsichtlich der vorliegenden Faserlänge und seines Stärkeanteiles zur Einstellung der jeweils weiteren Komponenten (Zugabe von nativer und vorverkleisterter Stärke bzw. Auswahl des Mischungverhältnisses von langen und kurzen Fasern bzw. Faserbündeln) klassiert wird.

Die übrigen Verfahrensschritte unter evorzugter Trockenmischung von faserhaltigem Rohmaterial und nativer Stärke sowie gegegenenfalls Flußmittel und/oder Füllstoffen (soweit sie in trockenem Zustand vorliegen) sowie zur Ausbildung einer flüssigkeitsdichten Randschicht entsprechen denjenigen, wie sie bereits anhand der Verfahren nach den Fig. 1 und 2 erläutert wurden. Obwohl eine Trocken-Vormischung zwischen Zerkleinerung und Plastifizierung zur viskosen Masse bevorzugt wird, kann auch unmittelbar die Vereinigung der Einsatzmaterialien zur viskosen Masse in dem Misch- und Knetprozeß, gegebenenfalls in Anwesenheit von Wasser erfolgen.

Es hat sich jedoch gezeigt, daß besonders vorteilhafte Ergebnisse dann erzielt werden, wenn der Misch- und Knetprozeß ohne Wassserzugabe lediglich unter Feuchtezugabe aufgrund der unter Wasserüberschuß vorverkleisterten Stärke durchgeführt wird, wobei dies im Ergebnis zu einer hochviskosen, teigigen Masse führt. Während des Backprozesses steht zur Verkleisterung der nativen Stärke sowohl stärkeimmanentes Fruchtwasser als auch der aus der vorverkleisterten Stärke resultierende Wasserüberschuß zur Verfügung. Formkörper besonders vorteilhafter Qualität hinsichtlich Oberfläche, Struktur, Elastizität, Gefüge, Festigkeit und Stabiliät in bezug auf die Formtiefe der Backform bzw. Formkörpertiefe ergeben sich mit den in Fig. 10 und Fig. 11 dargestellten Parametern, wobei die Elastizität und die Gefügestruktur wesentlich durch den Einsatz vorverkleisterter Stärke mitbestimmt werden. Die Oberfläche und Gefügestruktur wird ferner wesentlich durch die Abdampfbedingungen während des Backprozesses, d.h. durch den Feuchteanteil der viskosen Masse bestimmt, der möglichst niedrig sein soll, wobei es in vielen Fällen für die Massevorbereitung ausreicht, die Anfeuchtung auf die indirekte Wasserzugabe in Gestalt der Beimengung unter Wasserüberschuß vorverkleisterter Stärke zu beschränken. Diese Feuchte reicht aus, um die vollständige Verkleisterung der nativen Stärke herbeizuführen.

Von wesentlichem Einfluß ist ferner die Länge der verwendeten, aufgelockerten Faserbündel, gegebenenfalls auch in Verbindung mit Einzelfasern, wobei der Fasereinsatz auch wesentlich das Fließverhalten der Masse in der Backform bestimmt und unter Berücksichtigung der Formkörpergeometrie, insbesondere der Formkörpertiefe gewählt werden muß, wobei sich die Verwendung von kurzen und langen Fasern im Gemisch (lange und kurze Faserbündel) in vielen Fällen der Verwendung klassierter Fasern von verhältnismäßig festgelegter Länge im Bereich zwischen 0,5 mm und 5 mm als überlegen gezeigt hat, wie ein Vergleich der Fig. 8 und 9 zeigt. Es können aber auch längere Fasern/Faserbündel bis ca. 10 mm Länge in Abhängigkeit von den Anforderungen an den Formkörper verwendet werden, wobei dies auch die Anforderungen an den vorgeschalteten Zerkleinerungsprozeß, z.B. des Altpapieres, herabsetzt. Obwohl dies in dem Verfahren nach Fig. 1 und 2 nicht dargestellt ist, kann bei Verwendung von Faser/ Faserbündel-Gemischen mit unterschiedlichen Längen zur Bewertung des Ausgangsmateriales selbstverständlich auch dort ein Klassieren des Fasermateriales nach Länge der Faser/Faserbündeln bzw. hinsichtlich eines Stärkegehaltes erfolgen.

Bei Verwendung z.B. feuchten Deinking-Materiales kann die Verfahrensstufe "trocken mischen" in den Verfahren nach Fig. 2 und 3 auch im feuchten Zustand gegebenenfalls auch unter geringfügiger Wasserzugabe erfolgen.

Es kann ferner vorteilhaft sein, am Beginn des Backvorganges noch viskose Masse in die bereits geschlossene Form nachzuschieben, um auch bei teigiger Masse das Formfüllverhalten zu verbessern sowie gegebenenfalls nicht mit starr verriegelten Formhälften, sondern mit einem geringfügigen Nachdrücken der oberen Backplatte gegen die untere Backplatte während des Backprozesses zu arbeiten. Im allgemeinen hat es sich jedoch als hinreichend erwiesen, die Backtechnologie mit starr verriegelten Backplatten (konstanter Abstand = Wanddicke des Formkörpers während des Backprozesses) beizubehalten.

Erforderlichenfalls kann sich an dem Backprozeß nach den in Fig. 1 bis 3 dargestellten Verfahren ein Konditionieren der erhaltenen, aus der Backform entnommenen Formkörper anschließen, insbesondere unter Auftrag (Aufsprühen) des flüssigkeitsdichten Materials als Lösung, Emulsion oder Suspension in einer Wasserdampf-Atmosphäre.

Ein Vergleich der Fig. 8 und 9 verdeutlicht nochmals die Vorteile der Verwendung von Fasergemischen unterschiedlicher Faserlängen gegenüber der Verwendung von Zellulosefasern bzw. Faserbündeln, die lediglich eine bestimmte bzw. in einem engen Bereich liegende Faserlänge repräsentieren.

Bevorzugte Rezepturen zur Ausführung des erfindungsgemäßen Verfahrens sind in Fig. 10 und Fig. 11 dargestellt. Hieraus ergibt sich, daß auch Formkörper mit sehr großer Formtiefe mit guter Festigkeit, Elastizität, Gefüge und Oberflächenstruktur nach dem erfindungsgemäßen Verfahren hergestellt werden konnten, wenn der Einsatz an Fasermaterial, insbesondere aufgelockerter Faserbündel, zur Gesamtmasse der viskosen Masse 15 bis 30 Gew.% betrug, der Anteil Gesamtstärke (nativer plus vorverkleisterter Stärke) zur Gesamtmasse der viskosen Masse ca. 40 bis 5 Gew.% betrug, der Wasseranteil in der Gesamtmasse der viskosen Masse ca. 45 bis 70 Gew.% betrug und der Anteil vorverkleisterter Stärke an der Gesamtmasse der viskosen Masse ca. 10 bis 1% betrug.

Andererseits sind mit größeren Stärke- und geringeren Fasermaterialien (insbesondere bei Rohfasereinsatz) auch sehr gute Ergebnisse mit Beschichtungen gem. Fig.11 erreicht worden (Erhöhung des Anteiles vorverkleisterter Stärke bis 13 Gew.-%).

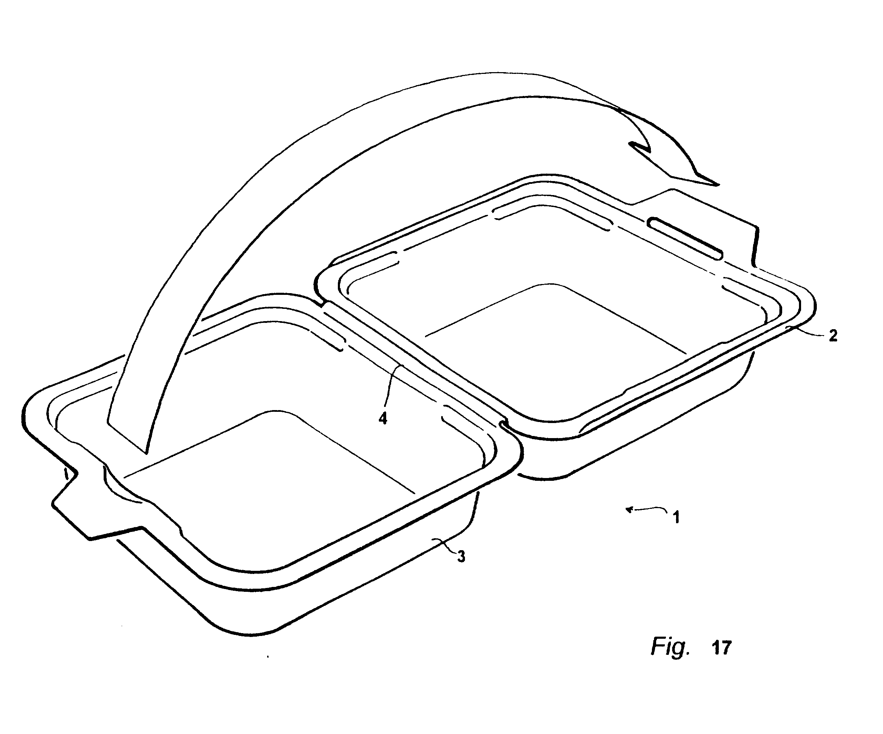

In den Fig. 17 bis 20 sind Ausführungsbeispiele von Formkörpern, die nach dem erfindungsgemäßen Verfahren hergestellt wurden, dargestellt. Fig. 11 zeigt einen Verpackungsformkörper 1 mit Boden- und Deckelteil 2, 3, die durch ein Scharnier 4 verbunden sind und z.B. zur verschließbaren Aufnahme von Lebensmitteln, auch im warmen Zustand, geeignet ist. Die flüssigkeitsdichte Randschicht ist hier nicht näher dargestellt. Der Verpackungsformkörper 1 weist zumindest eine innere hydrophobe Randschicht, vorzugsweise Beschichtung der Anwendungsphase A2 auf.

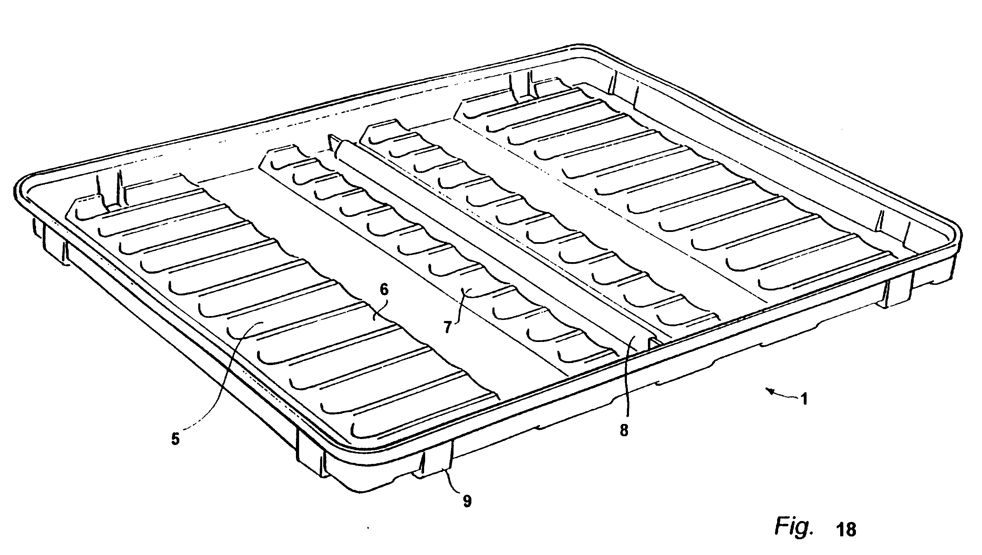

Fig. 18 zeigt einen Formkörper (Halbschale), der mit einem entsprechenden Gegenformkörper auch zu einer vollkommen geschlossenen Verpackung verbunden werden kann. Der schalenförmige Formkörper 1 weist eine Vielzahl von zylinderabschnittförmigen Vertiefungen 5 auf, wobei diese untereinander in einen längeren Abschnitt 6 und einen kürzeren Abschnitt 7 unterteilt sind und sich diese Anordnung symmetrisch, geteilt durch einen Mittelsteg 8 auf der anderen Seite des Formkörpers wiederholt. Seitliche "Füße" 9 erhöhen die Formstabilität und verbessern die Auflage und Stapelfähigkeit des Verpackungsformkörpers. Eine derartige Verpackungsschale kann z.B. zur Aufnahme von Kugelschreibern, Lippenstiften, Kosmetikartikeln, Bleistiften, Schreibgeräten, oder auch in der Pharmazie, z.B. zum Aufnehmen von Verpackungsröhrchen, verwendet werden. In diesem Fall wäre eine hinreichende Resistenz des Verpackungsformkörpers 1 gegen klimatische Umgebungseinflüsse (Feuchte) -Anwendungsklasse A1 - im allgemeinen ausreichend.

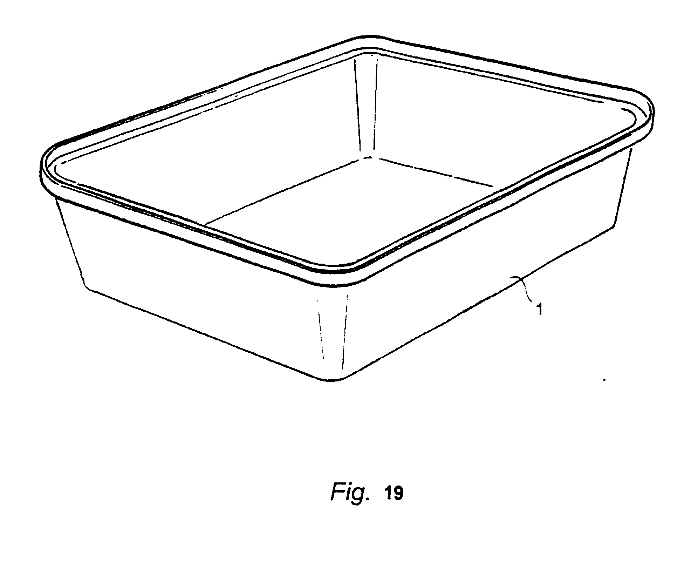

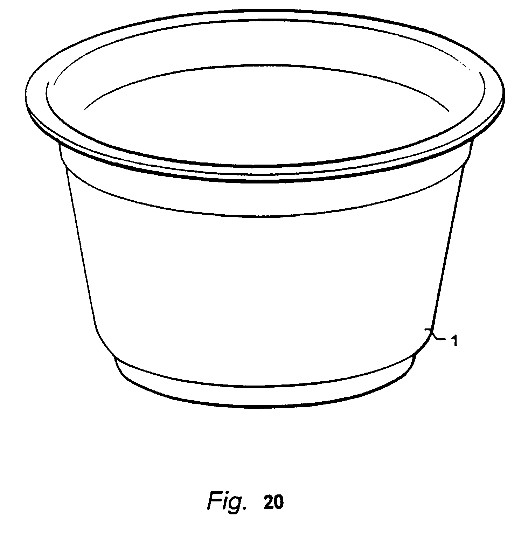

Die Fig. 19 und 20 zeigen verhältnismäßig tiefe Verpackungskörper 1, wie sie z.B. als Blumentopf, Saatgutschale oder für sonstige Verpackungs- oder Umhüllungszwecke verwendet werden können.

Alle Verpackungsformkörper 1, die nach dem vorerläuterten Verfahren hergestellt werden, könnten rasch, kostengünstig und mit hervorragenden Materialeigenschaften hinsichtlich Formstabilität, Bruchfestigkeit und Elastizität, Gefügedichte und Oberflächenbeschaffenheit hergestellt werden und sind, obgleich biologisch abbaubar, einer hydrophobierenden Behandlung, d.h. Imprägnierung mit Celluloseacetat und/oder Cellulosepropionat oder einer Folienbeschichtung mit Folie auf Polyester-, Polyesteramid- oder Polymilchsäurebasis unterworfen.

## Patentansprüche

1. Verfahren zur Herstellung von Formkörpern mit Barriereschicht, insbesondere Verpackungsformkörpem, aus biologisch abbaubarem Material unter Verwendung einer viskosen Masse, die biologisch abbaubares Fasermaterial, Wasser sowie Stärke enthält und unter Ausbildung eines Fasermaterial-Stärke-Verbundes in einer Backform gebacken wird, dadurch gekennzeichnet, daß als Fasermaterial eine Mischung aus lang- und kurzfasrigen Fasern oder Faserbündeln mit einer Faser- oder Faserbündellänge in einem Bereich von 0,5 mm bis 50 mm verwendet wird und der Formkörper unter Imprägnierung mit einer biologisch abbaubaren, hydrophoben Randschicht hergestellt wird, wobei die Randschicht aus weichmacherfreiem Celluloseacetat und/oder Celluloseacetatpropionat besteht, oder der Formkörper unter Ausbildung einer biologisch abbaubaren, flüssigkeitsdichten Randschicht durch eine Folienbeschichtung hergestellt wird, die durch ein Aufbringen einer Folie auf der Basis von Polyester, Polyesteramid oder Polymilchsäure auf den gebackenen Formkörper ausgebildet wird.

2. Verfahren nach Anspruch 1, dadurch gekennzeichnet, daß die Folie eine Dicke zwischen 20 µm und 200 µm aufweist.

3. Verfahren nach Anspruch 1 oder 2, dadurch gekennzeichnet, daß die Imprägnierung durch Aufsprühen, Gießen oder Tauchen mit einer hydrophoben Lösung erfolgt.

4. Verfahren nach zumindest einem der vorhergehenden Ansprüche 1 oder 2, dadurch gekennzeichnet, daß die Folienbeschichtung durch Heißsiegeln unter Vacuum- oder Druckanwendung und/oder unter Wärmebehandlung erfolgt.

5. Verfahren nach zumindest einem der vorhergehenden Ansprüche 1 bis 4, dadurch gekennzeichnet, daß die Imprägnierung oder Folienbeschichtung elastisch ist und vorzugsweise ohne Haftvermittler direkt auf den Formkörper aufgebracht wird.

6. Verfahren nach zumindest einem der vorhergehenden Ansprüche 1,2, 4 und 5, dadurch gekennzeichnet, daß die Folie an ihrer zur Haftverbindung mit dem Formkörper vorgesehenen Unterseite erwärmt wird.

7. Verfahren nach zumindest einem der vorhergehenden Ansprüche 1, 2 und 4 bis 6, dadurch gekennzeichnet, daß zumindest die mit der Folie zu beschichtende Haftfläche des Formkörpers vor einer Beschichtung mit der Folie auf eine Temperatur der Schmelztemperatur der Folie vorgewärmt und anschließend die Folie aufgebracht wird.

8. Verfahren nach zumindest einem der vorhergehenden Ansprüche 1 bis 7, dadurch gekennzeichnet, daß eine Prozeßwärme der Backform, vorzugsweise innerhalb der Backvorrichtung, oder eine Restwärme des Formteiles von dem vorhergehenden Backprozeß zur Erwärmung des Formkörpers und/oder eines auf diesen aufzubringenden hydrophoben Mediums, insbesondere einer Beschichtungsfolie, für eine anschließende Imprägnierung oder Beschichtung des Formkörpers genutzt wird.

9. Verfahren nach zumindest einem der Ansprüche 1, 3, 5 oder 8, dadurch gekennzeichnet, daß zur Imprägnierung eine Lösung, die als hydrophobe Substanz Celluloseacetat und/oder Celluloseacetatpropionat sowie ein, insbesondere leicht flüchtiges, Lösungsmittel enthält, verwendet wird.

10. Verfahren nach zumindest einem der Ansprüche 1 bis 9, dadurch gekennzeichnet, daß zur Bildung des Fasermaterials faserhaltiges Rohmaterial verwendet wird, das insbesondere unter vorheriger Zerkleinerung zerfasert wird.

11. Verfahren nach Anspruch 10, dadurch gekennzeichnet, daß das faserhaltige Rohmaterial Altpapier, Recyclingmaterial, insbesondere entfärbtes Altpapier, biologisch abbaubares Fasermaterial wie Zellulosefasern enthaltende Produktionsabfälle, insbesondere Holz- oder Papierschliff, Rübenschnitzel oder dgl. sind.

12. Verfahren nach einem der Ansprüche 1 bis 11, dadurch gekennzeichnet, daß die Faser oder Faserbündel eine Länge im Bereich von 0,5 mm bis 5 mm aufweisen.

13. Verfahren nach zumindest einem der vorhergehenden Ansprüche 1 bis 12, dadurch gekennzeichnet, daß als Stärke native und/oder vorverkleisterte oder modifizierte Stärke verwendet wird.

14. Verfahren nach zumindest einem der vorhergehenden Ansprüche 1 bis 13, dadurch gekennzeichnet, daß in der viskosen Masse der Anteil Fasermaterial 10 Gew.% bis 30 Gew.%, der Anteil Stärke 5 Gew.% bis 40 Gew.%, der Anteil Wasser 70 Gew.% bis 40 Gew.% beträgt.

15. Verfahren nach zumindest einem der vorhergehenden Ansprüche 13 oder 14, dadurch gekennzeichnet, daß in der viskosen Masse der Anteil vorverkleisteter oder modifizierter Stärke 1 Gew.% bis 13 Gew.% beträgt.

16. Verfahren nach zumindest einem der vorhergehenden Ansprüche 1 bis 15, dadurch gekennzeichnet, daß das faserhaltige Rohmaterial, insbesondere Altpapier, zerkleinert und anschließend in Anwesenheit von Wasser und Zugabe von Stärke, vorzugsweise nativer Stärke, auf seine Faserstruktur zurückgeführt und die formbare, viskose Masse gebildet und diese anschließend zu Formkörpern gebacken wird.

17. Verfahren nach zumindest einem der vorhergehenden Ansprüche 1 bis 16, dadurch gekennzeichnet, daß die Stärke dem faserhaltigen Rohmaterial, zumindest teilweise, während des Zerkleinerungsvorganges und/oder eines anschließenden Trocken- oder Naß-Mischvorganges und/oder während eines anschließenden, egalisierenden Misch- und Knetvorganges als native und/oder modifizierte und/oder vorverkleisterte Stärke, zugesetzt wird.

18. Verfahren nach zumindest einem der vorhergehenden Ansprüche 1 bis 17, dadurch gekennzeichnet, daß für dickwandige und/oder großflächige Formkörper bevorzugt langfasrige Fasern oder Faserbündel bis zu 50 mm Länge verwendet werden, insbesondere Fasem oder Faserbündel mit einer Faser- oder Faserbündellänge im Bereich von 10 mm bis 50 mm im Gemisch mit kurzfasrigen Fasem oder Faserbündeln mit einer Faser- oder Faserbündellänge von 0,5 mm bis 20 mm.

19. Formkörper, insbesondere Verpackungsformkörper, aus biologisch abbaubarem Material, bestehend aus biologisch abbaubarem Fasermaterial, Stärke und einem Restanteil Wasser, insbesondere hergestellt gemäß Verfahren nach zumindest einem der vorhergehenden Ansprüche 1 bis 18, dadurch gekennzeichnet, daß der Formkörper ein Gemisch aus lang- und kurzfasrigen Fasern oder Faserbündeln mit einer Faser- oder Faserbündellänge von 0,5 mm - 50 mm sowie zumindest einseitig eine biologisch abbaubare, hydrophobe Randschicht aufweist, die weichmacherfrei auf der Basis von Celluloseacetat oder Celluloseacetatpropionat gebildet ist, oder eine Beschichtungsfolie auf der Basis von Polyester, Polyesteramid oder Polymilchsäure aufweist.

20. Formkörper nach Anspruch 19, dadurch gekennzeichnet, daß der Formkörper allseitig beschichtet ist.

21. Formkörper nach zumindest einem der vorhergehenden Ansprüche 19 oder 20, dadurch gekennzeichnet, daß der Anteil Fasermaterial zu Stärke 4 : 1 bis 1 : 4 beträgt.

## Claims

1. Process for the production of moulded bodies with barrier layer, particularly packaging moulded bodies, comprising biodegradable material using a viscous mass which contains biodegradable fibre material, water and starch and with the formation of a fibre material/starch composite is baked in a baking mould, characterized in that a mixture of long and short-fibre fibres or fibre bundles with a fibre or fibre bundle length in a range from 0.5 mm to 50 mm is used as fibre material and the moulded body is produced with impregnation with a biodegradable hydrophobic outer layer, the outer layer consisting of plasticizer-free cellulose acetate and/or cellulose acetate propionate, or the moulded body is produced with formation of a biodegradable liquid-tight outer layer by means of a film coating which is formed by an application of a film based on polyester, polyester amide or polylactic acid to the baked moulded body.

2. Process according to Claim 1, characterized in that the film has a thickness between 20 µm and 200 µm.

3. Process according to Claim 1 or 2, characterized in that the impregnation takes place by spraying, casting or dipping with a hydrophobic solution.

4. Process according to at least one of the preceding Claims 1 or 2, characterized in that the film coating takes place by heat-sealing with vacuum or pressure application and/or with heat treatment.

5. Process according to at least one of the preceding Claims 1 to 4, characterized in that the impregnation or film coating is elastic and preferably applied directly to the moulded body without adhesion promoter.

6. Process according to at least one of the preceding Claims 1, 2, 4 and 5, characterized in that the film underside intended for adhesive bonding to the moulded body is heated.

7. Process according to at least one of the preceding Claims 1, 2 and 4 to 6, characterized in that at least the adhesion surface of the moulded body to be coated with the film is pre-heated to a temperature [...] the melting point of the film prior to a coating with the film and the film is applied thereafter.

8. Process according to at least one of the preceding Claims 1 to 7, characterized in that a process heat of the baking mould, preferably inside the baking device, or a residual heat of the moulded part from the preceding baking process is used to heat the moulded body and/or a hydrophobic medium to be applied thereto, particularly a coating film, for a subsequent impregnation or coating of the moulded body.

9. Process according to at least one of Claims 1, 3, 5 or 8, characterized in that a solution which contains as hydrophobic substance cellulose acetate and/or cellulose acetate propionate as well as a solvent, particularly a readily volatile one, is used for impregnation.

10. Process according to at least one of Claims 1 to 9, characterized in that fibrous raw material which is shredded in particular with prior crushing is used to form the fibre material.

11. Process according to Claim 10, characterized in that the fibrous raw material is old paper, recycling material, particularly deinked old paper, production waste containing biodegradable fibre such as cellulose fibres, particularly mechanical wood or paper pulp, sugar beet chips or the like.

12. Process according to one of Claims 1 to 11, characterized in that the fibre or fibre bundle have a length in the range from 0.5 mm to 5 mm.

13. Process according to at least one of the preceding Claims 1 to 12, characterized in that native and/or pre-gelatinized or modified starch is used as starch.

14. Process according to at least one of the preceding Claims 1 to 13, characterized in that in the viscous mass the content of fibre material is 10 wt.% to 30 wt.%, the starch content 5 wt.% to 40 wt.%, the water content 70 wt.% to 40 wt.%.

15. Process according to at least one of the preceding Claims 13 or 14, characterized in that in the viscous mass the content of pre-gelatinized or modified starch is 1 wt.% to 13 wt.%.

16. Process according to at least one of the preceding Claims 1 to 15, characterized in that the fibrous raw material, particularly old paper, is crushed and then returned to its fibrous structure in the presence of water and addition of starch, preferably native starch, and the mouldable viscous mass is formed and is then baked into moulded bodies.

17. Process according to at least one of the preceding Claims 1 to 16, characterized in that the starch is added to the fibrous raw material, at least partially, during the crushing process and/or a subsequent dry or wet mixing process and/or during a subsequent levelling mixing and kneading process as native and/or modified and/or pre-gelatinized starch.

18. Process according to at least one of the preceding Claims 1 to 17, characterized in that long-fibre fibres or fibre bundles up to 50 mm length are preferably used for thick-walled and/or large-area moulded bodies, particularly fibres or fibre bundles with a fibre or fibre bundle length in the range from 10 mm to 50 mm in the mixture with short-fibre fibres or fibre bundles with a fibre or fibre bundle length of 0.5 mm to 20 mm.

19. Moulded body, particularly packaging moulded body, comprising biodegradable material, consisting of biodegradable fibre material, starch and a residual water content, particularly produced according to processes according to at least one of the preceding Claims 1 to 18, characterized in that the moulded body has a mixture comprising long and short-fibre fibres or fibre bundles with a fibre or fibre bundle length of 0.5 mm - 50 mm and at least on one side a biodegradable hydrophobic outer layer which is formed in plasticizer-free manner on the basis of cellulose acetate or cellulose acetate propionate, or has a coating film based on polyester, polyester amide or polylactic acid.

20. Moulded body according to Claim 19, characterized in that the moulded body is coated on all sides.

21. Moulded body according to at least one of the preceding Claims 19 or 20, characterized in that the content of fibre material to starch is 4 : 1 to 1 : 4.

## Revendications

1. Procédé pour fabriquer des corps moulés comportant une couche formant barrière, notamment des corps moulés d'emballage, en un matériau biodégradable moyennant l'utilisation d'une masse visqueuse qui contient un matériau fibreux biodégradable, de l'eau ainsi que de l'amidon et que l'on fait cuire dans un moule de cuisson, avec formation d'un composite de matériau fibreux-amidon, caractérisé en ce qu'on utilise comme matériau fibreux un mélange formé de fibres longues et de fibres courtes ou de faisceaux de fibres courtes ou longues ayant une longueur des fibres ou des faisceaux de fibres se situant dans la gamme de 0,5 à 50 mm et qu'on fabrique le corps moulé au moyen d'une imprégnation avec une couche de bord hydrophobe biodégradable, la couche de bord étant réalisée en acétate de cellulose et/ou en acétate-propionate de cellulose sans agent plastifiant, ou bien on fabrique le corps moulé en formant une couche de bord biodégradable, étanche aux liquides, au moyen d'un revêtement en forme de feuille, qui est formé par application d'une feuille à base de polyester, de polyesteramide ou de polyacide lactique sur le corps moulé cuit.

2. Procédé selon la revendication 1, caractérisé en ce que la feuille possède une épaisseur comprise entre 20 µm et 200 µm.

3. Procédé selon la revendication 1 ou 2, caractérisé en ce que l'imprégnation s'effectue par pulvérisation, coulée ou immersion avec une solution hydrophobe.

4. Procédé selon la revendication 1 ou 2, caractérisé en ce que le revêtement en forme de feuille est réalisé par thermoscellement avec application d'un vide ou d'une pression et/ou moyennant un traitement thermique.

5. Procédé selon l'une quelconque des revendications 1 à 4, caractérisé en ce que l'imprégnation ou le revêtement en forme de feuille est élastique et est déposé de préférence sans agent adhésif directement sur le corps moulé.

6. Procédé selon l'une quelconque des revendications 1, 2, 4 et 5, caractérisé en ce qu'on chauffe la feuille sur sa face inférieure prévue pour la liaison par adhérence au corps moulé.

7. Procédé selon l'une quelconque des revendications 1, 2 et 4 à 6, caractérisé en ce qu'on préchauffe au moins la surface adhésive du corps moulé, avant le revêtement avec la feuille, à une température égale à la température de fusion de la feuille et qu'ensuite on applique la feuille.

8. Procédé selon l'une quelconque des revendications 1 à 7, caractérisé en ce qu'on utilise une chaleur de processus du moule de cuisson, de préférence à l'intérieur du dispositif de cuisson, ou une chaleur résiduelle de la pièce moulée provenant du processus de cuisson précédent pour chauffer le corps moulé et/ou un milieu hydrophobe devant être appliqué sur ce corps, notamment une feuille de revêtement, pour une imprégnation ultérieure ou un revêtement ultérieur du corps moulé.

9. Procédé selon l'une quelconque des revendications 1, 3, 5 ou 8, caractérisé en ce que pour l'imprégnation on utilise une solution qui contient, en tant que substance hydrophobe, de l'acétate de cellulose et/ou de l'acétate-propionate de cellulose, ainsi qu'un solvant, notamment un solvant très volatil.

10. Procédé selon l'une quelconque des revendications 1 à 9, caractérisé en ce que pour la formation du matériau fibreux, on utilise une matière première contenant des fibres, que l'on effiloche notamment moyennant une fragmentation préalable.

11. Procédé selon la revendication 10, caractérisé en ce que la matière première contenant des fibres est constituée par des vieux papiers, un matériau de recyclage, notamment des vieux papiers décolorés, des déchets de fabrication contenant un matériau fibreux biodégradable, comme par exemple des fibres de cellulose, notamment de la pâte mécanique ou de la pâte de bois, des cossettes de betteraves ou analogues.

12. Procédé selon l'une quelconque des revendications 1 à 11, caractérisé en ce que les fibres ou le faisceau de fibres possèdent une longueur dans la gamme de 0,5 mm à 5 mm.

13. Procédé selon l'une quelconque des revendications 1 à 12, caractérisé en ce qu'on utilise comme amidon, de l'amidon natif et/ou préalablement gélifié ou modifié.

14. Procédé selon l'une quelconque des revendications 1 à 13, caractérisé en ce que dans la masse visqueuse le pourcentage du matériau fibreux est compris entre 10 % en poids et 30 % en poids, le pourcentage d'amidon est compris ente 5 % en poids et 40 % en poids et le pourcentage d'eau est compris entre 70 % en poids et 40 % en poids.

15. Procédé selon la revendication 13 ou 14, caractérisé en ce que dans la masse visqueuse le pourcentage de l'amidon préalablement gélifié ou modifié est compris entre 1 % en poids et 13 % en poids.

16. Procédé selon l'une quelconque des revendications 1 à 15, caractérisé en ce qu'on fragmente la matière première contenant des fibres, notamment les vieux papiers, et qu'ensuite en présence d'eau et avec addition d'amidon, de préférence d'amidon natif, on redonne à la matière première sa structure fibreuse, on forme la masse visqueuse pouvant être moulée et on fait cuire ensuite cette masse pour former des corps moulés.

17. Procédé selon l'une quelconque des revendications 1 à 16, caractérisé en ce qu'on ajoute l'amidon à la matière première contenant des fibres, au moins en partie, pendant le processus de fragmentation et/ou pendant un processus ultérieur de mélange à sec ou par voie humide et/ou pendant un processus ultérieur de mélange et de malaxage réalisant une égalisation, en tant qu'amidon natif et/ou modifié et/ou préalablement gélifié.

18. Procédé selon l'une quelconque des revendications 1 à 17, caractérisé en ce que pour des corps moulés à paroi épaisse et/ou de surface étendue, on utilise de préférence des fibres longues ou un faisceau de fibres longues ayant une longueur atteignant jusqu'à 50 mm, notamment des fibres ou un faisceau de fibres possédant une longueur dans la gamme de 10 mm à 50 mm en mélange avec des fibres courtes ou des faisceaux de fibres courtes ayant une longueur comprise entre 0,5 mm et 20 mm.

19. Corps moulé, notamment corps moulé d'emballage, constitué par un matériau biodégradable, constitué par un matériau fibreux biodégradable, de l'amidon et le reste formé d'eau, fabriqué notamment conformément au procédé selon l'une quelconque des revendications 1 à 18, caractérisé en ce que le corps moulé comporte un mélange de fibres longues et de fibres courtes ou de faisceaux de fibres longues et courtes avec une longueur des fibres ou des faisceaux de fibres de 0,5 mm - 50 mm ainsi que, au moins d'un côté, une couche de bord hydrophobe biodégradable, qui est formée sans agent plastifiant à partir d'acétate de cellulose ou d'acétate-propionate de cellulose, ou comporte une feuille de revêtement à base de polyester, de polyesteramide et de polyacide lactique.

20. Corps moulé selon la revendication 19, caractérisé en ce qu'il est recouvert de tous les côtés.

21. Corps moulé selon la revendication 19 ou 20, caractérisé en ce que le rapport du matériaux fibreux à l'amidon est compris entre 4 :1 et 1 :4.
